# EUROPÄISCHE PATENTSCHRIFT

(11) **EP 3 411 429 B1**
(45) Veröffentlichungstag und Bekanntmachung des Hinweises auf die Patenterteilung: **24.06.2020**
(21) Anmeldenummer: 17701735.7
(22) Anmeldetag: 31.01.2017
(51) Int. Cl.: C08J 5/18, C08L 77/06, C08L 77/02, B32B 27/36, B32B 27/34, B32B 27/32, B32B 27/30, B32B 27/08, C08G 69/26

(54) **POLYMERFILM ENTHALTEND EIN AMORPHES UND EIN TEILKRISTALLINES POLYAMID**
POLYMERIC FILM CONTAINING AN AMORPHOUS AND A SEMICRYSTALLINE POLYAMIDE
FILM POLYMERE COMPRENANT UN POLYAMIDE AMORPHE ET PARTIELLEMENT CRISTALLIN

(30) Priorität: 05.02.2016 EP 16154413
(43) Veröffentlichungstag der Anmeldung: 12.12.2018
(73) Patentinhaber: BASF SE, 67056 Ludwigshafen (DE)
(72) Erfinder: SPRAFKE, Johannes Klaus, 67056 Ludwigshafen (DE); MINKWITZ, Rolf, 67056 Ludwigshafen (DE); GÖTZ,Walter, 88167 Grünenbach (DE)
(74) Vertreter: BASF IP Association
(86) Internationale Anmeldenummer: PCT/EP2017/052058
(87) Internationale Veröffentlichungsnummer: WO 2017/134054

(56) Entgegenhaltungen:
- EP-A1- 2 535 365
- EP-A1- 2 848 390
- EP-A2- 0 287 839
- EP-A2- 0 465 931
- WO-A1-99/12735
- WO-A1-2010/081871
- US-A- 5 266 655
- US-A1- 2006 228 502
- US-A1- 2011 076 507
- US-A1- 2012 040 117
- US-B2- 6 916 517

## Beschreibung

Die vorliegende Erfindung betrifft einen Polymerfilm (P), enthaltend eine Polyamidzusammensetzung (PZ), die ein amorphes Polyamid (A) und ein teilkristallines Polyamid (B) enthält, sowie ein Verfahren zur Herstellung des Polymerfilms (P). Darüber hinaus betrifft die vorliegende Erfindung ein Verfahren zum Verpacken von Lebensmitteln mit dem Polymerfilm (P).

Polyamide sind industriell von besonderer Bedeutung, da sie sich durch sehr gute mechanische Eigenschaften auszeichnen, insbesondere besitzen sie eine hohe Festigkeit, Steifigkeit und Zähigkeit, eine gute Chemikalienbeständigkeit sowie eine hohe Abriebfestigkeit. Sie werden beispielsweise zur Herstellung von Angelschnüren, Kletterseilen und Teppichböden verwendet. Darüber hinaus finden Polyamide Anwendung zur Herstellung von Verpackungsfilmen und Verpackungshüllen.

Beim Einsatz von teilkristallinen Polyamiden als Verpackungsfilm oder Verpackungshülle ist häufig die Sauerstoffdurchlässigkeit der teilkristallinen Polyamide zu hoch, so dass sie insbesondere zum Einsatz der Verpackung von Lebensmitteln ungeeignet sind. Im Stand der Technik sind verschiedene Verfahren beschrieben, um kristalline Polyamide zu modifizieren, um deren Eigenschaften zu ändern, sodass sie als Verpackungsfilme oder Verpackungshüllen eingesetzt werden können. Insbesondere werden die Eigenschaften teilkristalliner Polyamide häufig durch die Herstellung von Blends aus den teilkristallinen Polyamiden mit amorphen Polyamiden verändert. Die US 5,266,655 beschreibt Blends von amorphen Polyamiden mit teilkristallinen Polyamiden. Die amorphen Polyamide können beispielsweise aus 2-Methyl-1,5-pentamethylendiamin und Isophthalsäure hergestellt werden. Als teilkristalline Polyamide sind beispielsweise Nylon 66 und Nylon 6 offenbart. Der Blend enthält weniger als 40 Gew.-% teilkristallines Polyamid, so dass der Blend insgesamt amorph ist.

Die US 4,800,129 beschreibt Blends aus einem amorphen Polyamid und einem teilkristallinen Polyamid, wobei als amorphes Polyamid ein Hexamethylendiaminisophthalamid oder ein Hexamethylendiaminisophthalamid / Hexamethylendiaminterephthalamid-Copolymer eingesetzt wird. Es werden 10 bis 40 Gew.-% des teilkristallinen Polyamids eingesetzt und 90 bis 60 Gew.-% des amorphen Polyamids. Aus diesen Blends können Filme hergestellt werden.

Die EP 0 358 038 beschreibt ebenfalls Polyamidblends, in denen ein amorphes Polyamid und ein teilkristallines Polyamid enthalten ist. Als amorphes Polyamid wird ein Hexamethylendiaminisophthalamid / Hexamethylendiaminterephthalamid-Copolymer (Polyamid 6I/6T) eingesetzt, als teilkristalline Polyamide sind unter anderem Nylon 6/12 und Nylon 6/66 offenbart. Der Blend enthält 10 bis 70 Gew.-% des amorphen Polyamids und 10 bis 90 Gew.-% des teilkristallinen Polyamids. Diese Blends können zur Herstellung von Filmen eingesetzt werden.

Nachteilig bei den in der US 5,266,655 und US 4,800,129 beschriebenen Blends ist, dass sich diese nur schlecht extrudieren lassen und zu verknitterten Folien neigen. Ihre Durchstoßfestigkeit ist nur sehr gering. Nachteilig bei den in der EP 0 358 038 beschriebenen Blends ist ihre relativ hohe Sauerstoffdurchlässigkeit, insbesondere bei hoher Luftfeuchtigkeit und bei höheren Temperaturen. Sie besitzen außerdem nur eine geringe Zug- und Biegesteifigkeit.

Die der vorliegenden Erfindung zugrunde liegende Aufgabe bestand darin, einen Polymerfilm bereitzustellen, der ein Polyamid enthält und der die Nachteile der im Stand der Technik beschriebenen Polymerfilme nicht oder nur in vermindertem Maße aufweist. Der Polymerfilm sollte zudem möglichst einfach und kostengünstig herstellbar sein.

Gelöst wurde diese Aufgabe durch einen Polymerfilm (P) enthaltend mindestens eine Polyamidzusammensetzung (PZ), die die Komponenten
(A) 2 bis 30 Gew.-% mindestens eines amorphen Polyamids hergestellt durch Polymerisation der Komponenten
   (A1) mindestens eine Dicarbonsäure und
   (A2) mindestens ein Diamin; und
(B) 70 bis 98 Gew.-% mindestens eines teilkristallinen Polyamids;
enthält, wobei die Komponente (A1) Isophthalsäure enthält und die Komponente (A2) 2-Methyl-1,5-diaminopentan enthält und wobei die Gewichtsprozente jeweils bezogen sind auf die Summe der Gewichtsprozente der Komponenten (A) und (B).

Es wurde überraschend gefunden, dass die erfindungsgemäßen Polymerfilme (P) eine niedrige Sauerstoffpermeabilität auch bei hohen Luftfeuchtigkeiten und hohen Temperaturen, die beispielsweise oberhalb von 25 °C liegen, aufweisen. Sie haben daher eine gegenüber den im Stand der Technik beschriebenen Polymerfilmen verbesserte Sauerstoffbarriere. Zudem weisen sie eine hohe Zug- und Biegefestigkeit auf und sind gut herstellbar, insbesondere da sie eine geringe Faltenbildung bei der Herstellung aufweisen, insbesondere bei der Herstellung durch Folienextrusion.

Die erfindungsgemäßen Polymerfilme (P) weisen zudem eine besonders niedrige Migration an Monomeren auf, insbesondere eine niedrige Migration in Bezug auf die Monomere, aus denen das mindestens eine amorphe Polyamid (A) hergestellt wird. Beispielsweise migrieren in 3%-iger wässriger Essigsäurelösung, in 10%-iger wässriger Ethanollösung und in 50%-iger wässriger Ethanollösung gemessen nach EN 13130-1 und EN 13130-2 für 10 Tage bei 60 °C, weniger als 5 mg Isophthalsäure und weniger als 2,5 mg 2-Methyl-1,5-Diaminopentan. Wird als die mindestens eine Dicarbonsäure (A1) zusätzlich Terephthalsäure eingesetzt, so migrieren zudem weniger als 7,5 mg Terephthalsäure bei diesen Bedingungen. Die Messung erfolgt, indem ein Quadratdezimeter des Polymerfilms (P) mit einer Dicke von 50 µm in 100 ml Lösungsmittel (3%-ige wässrige Essigsäurelösung, 10%-ige wässrige Etanollösung oder 50%-ige wässrige Ethanollösung) beidseitig getaucht wird und die gemessene Konzentration mit 6 multipliziert wird, entsprechend EN 13130-1:2004 Kapitel 10.2, um den Kontakt zu 1 kg Lebensmittel zu simulieren.

Nachfolgend wird die Erfindung näher erläutert.

### Polymerfilm (P)

Erfindungsgemäß enthält der Polymerfilm (P) mindestens eine Polyamidzusammensetzung (PZ).

Unter "mindestens eine Polyamidzusammensetzung (PZ)" wird im Rahmen der vorliegenden Erfindung sowohl genau eine Polyamidzusammensetzung (PZ) als auch eine Mischung aus zwei oder mehreren Polyamidzusammensetzungen (PZ) verstanden.

Der Polymerfilm (P) weist beispielsweise eine Dicke im Bereich von 0,1 µm bis 1 mm auf, bevorzugt eine Dicke im Bereich von 5 bis 500 µm und insbesondere bevorzugt im Bereich von 20 bis 100 µm.

Gegenstand der vorliegenden Erfindung ist somit auch ein Polymerfilm (P), bei dem der Polymerfilm (P) eine Dicke im Bereich von 0,1 µm bis 1 mm aufweist.

Der Polymerfilm (P) kann zusätzlich zu der mindestens einen Polyamidzusammensetzung (PZ) mindestens ein weiteres Polymer (P2) enthalten.

"Mindestens ein weiteres Polymer (P2)" bedeutet im Rahmen der vorliegenden Erfindung sowohl genau ein weiteres Polymer (P2) als auch eine Mischung aus zwei oder mehreren weiteren Polymeren (P2).

Als mindestens ein weiteres Polymer (P2) eignen sich alle dem Fachmann bekannten Polymere. Wird eine Mischung aus zwei oder mehreren weiteren Polymeren (P2) als mindestens ein weiteres Polymer (P2) eingesetzt, so ist diese Mischung von der mindestens einen Polyamidzusammensetzung (PZ) verschieden.

Bevorzugt ist das mindestens eine weitere Polymer (P2) ausgewählt aus der Gruppe bestehend aus Polyolefinen, Ethylvinylalkoholen, Ethylvinylacetaten, Polyethylenterephthalaten, Polyvinylidenchloriden, mit Maleinsäureanhydrid gegrafteten Polyolefinen, Polyestern und lonomeren. Besonders bevorzugt ist das mindestens eine weitere Polymer (P2) ausgewählt aus der Gruppe bestehend aus Polyolefinen, Ethylvinylalkoholen, Ethylvinylacetaten, Polyethylenterephthalaten, Polyvinylidenchloriden und mit Maleinsäureanhydrid gegraften Polyolefinen. Am meisten bevorzugt ist das mindestens eine weitere Polymer (P2) ausgewählt aus der Gruppe bestehend aus Polyolefinen, mit Maleinsäureanhydrid gegrafteten Polyolefinen und Ethylvinylalkoholen.

Ist das mindestens eine weitere Polymer (P2), ausgewählt aus der Gruppe bestehend aus Polyolefinen, so ist es bevorzugt, dass zusätzlich mit Maleinsäureanhydrid gegraftete Polyolefine als mindestens ein weiteres Polymer (P2) eingesetzt werden. Dabei ist es möglich, dass als das mindestens eine weitere Polymer (P2) eine Mischung aus Polyolefinen und mit Maleinsäureanhydrid gegrafteten Polyolefinen eingesetzt wird. Ebenso ist es möglich, dass, wenn der Polymerfilm (P) ein weiter unten beschriebener Multilayerfilm ist, der Polymerfilm (P) mindestens eine erste weitere Schicht mindestens eines weiteren Polymers (P2) enthält, wobei das mindestens eine weitere Polymer (P2) ausgewählt ist aus der Gruppe bestehend aus mit Maleinsäureanhydrid gegrafteten Polyolefinen und der Polymerfilm (P) mindestens eine zweite weitere Schicht mindestens eines weiteren Polymers (P2) enthält, wobei das mindestens eine weitere Polymer (P2) ausgewählt ist aus der Gruppe bestehend aus Polyolefinen. Der Polymerfilm (P) enthält die erste weitere Schicht dann vorzugsweise zwischen der ersten Schicht der mindestens einen Polyamidzusammensetzung (PZ) und der zweiten weiteren Schicht.

Polyolefine als solche sind dem Fachmann bekannt. Bevorzugte Polyolefine sind Polypropylen (PP), low-density Polyethylen (LDPE) linear-low-density Polyethylen (LLDPE) und very-low-density Polyethylen (VLDPE).

Linear-low-density Polyethylen (LLDPE) ist ein Copolymer aus Ethylen und mindestens einem C₄-C₈-α-Olefin. Linear-low-density Polyethylen (LLDPE) zeichnet sich durch lange Polymerketten mit einer niedrigen Anzahl an Seitenketten oder Quervernetzungen aus. Die Anzahl der Seitenketten in linear-low-density Polyethylen (LLDPE) ist üblicherweise niedriger als in low-density Polyethylen (LDPE) und in medium-density Polyethylen (MDPE). Der Schmelzpunkt von linear-low-density Polyethylen (LLDPE) liegt vorzugsweise im Bereich von 110 bis 130 °C, seine Dichte liegt im Bereich von 0,91 bis 0,93 g/cm³.

Very-low-density Polyethylen (VLDPE) sind Copolymere aus Ethylen und mindestens einem C₄-C₈-α-Olefin. Sie weisen üblicherweise einen Schmelzpunkt im Bereich von 110 bis 130 °C und eine Dichte im Bereich von 0,86 bis < 0,91 g/cm³ auf. Der Anteil an C₄-C₈-α-Olefinen in VLDPE ist in der Regel höher als im LLDPE.

Unter "C₄-C₈-α-Olefin" werden im Rahmen der vorliegenden Erfindung lineare und verzweigte, bevorzugt lineare, Alkylene (Alkene) mit 4 bis 8 Kohlenstoffatomen verstanden, die in α-Position ungesättigt sind, also in α-Stellung eine C-C-Doppelbindung aufweisen. Beispiele hierfür sind 1-Buten, 1-Penten, 1-Hexen, 1-Hepten und 1-Octen. 1-Buten, 1-Hexen und 1-Octen sind bevorzugt.

Bevorzugt als Poly(ethylenvinylacetate) sind Copolymere von Ethylen mit Vinylacetat. Beispielsweise werden im Bereich von 82 bis 99,9 Gew.-% Ethylen und im Bereich von 0,1 bis 18 Gew.-% Vinylacetat, bevorzugt im Bereich von 88 bis 99,9 Gew.-% Ethylen und im Bereich von 0,1 bis 12 Gew.-% Vinylacetat zur Herstellung eingesetzt.

Bevorzugte Poly(ethylenvinylalkohole) sind erhältlich durch vollständige oder teilweise Verseifung der vorstehend beschriebenen Poly(ethylenvinylacetate). Beispielsweise enthalten die Poly(ethylenvinylalkohole) im Bereich von 50 bis 75 mol.-% Ethylen und im Bereich von 25 bis 50 mol.-% Vinylalkohol, bezogen auf die Gesamtstoffmenge der Poly(ethylenvinylalkohole).

Der Polymerfilm (P) kann das mindestens eine weitere Polymer (P2) als Blend (Mischung) mit der mindestens einen Polyamidzusammensetzung (PZ) enthalten. Darüber hinaus ist es möglich und erfindungsgemäß bevorzugt, dass der Polymerfilm (P) die mindestens eine Polyamidzusammensetzung (PZ) als mindestens eine erste Schicht enthält und das mindestens eine weitere Polymer (P2) als mindestens eine weitere Schicht enthält.

In dieser Ausführungsform ist es bevorzugt, dass die mindestens eine erste Schicht, die die mindestens eine Polyamidzusammensetzung (PZ) enthält, kein weiteres Polymer (P2) enthält.

"Mindestens eine weitere Schicht" bedeutet im Rahmen der vorliegenden Erfindung sowohl genau eine weitere Schicht als auch zwei oder mehrere weitere Schichten. Zwei oder mehrere weitere Schichten sind bevorzugt.

Es ist also bevorzugt, dass der Polymerfilm (P) mindestens eine erste Schicht der mindestens einen Polyamidzusammensetzung (PZ) enthält und der Polymerfilm (P) außerdem mindestens eine weitere Schicht enthält, wobei die mindestens eine weitere Schicht mindestens ein weiteres Polymer (P2), das ausgewählt ist aus der Gruppe bestehend aus Polyolefinen, Poly(ethylenvinylalkoholen), Poly(ethylenvinylacetaten), Polyethylenterephthalaten, Polyvinylidenchloriden und mit Maleinsäureanhydrid gegraftete Polyolefinen, enthält.

Gegenstand der vorliegenden Erfindung ist somit auch ein Polymerfilm (P), bei dem der Polymerfilm (P) mindestens eine Schicht der mindestens einen Polyamidzusammensetzung (PZ) enthält und der Polymerfilm (P) mindestens eine weitere Schicht enthält, wobei die mindestens eine weitere Schicht mindestens ein weiteres Polymer (P2), das ausgewählt ist aus der Gruppe bestehend aus Polyolefinen, Poly(ethylenvinylalkoholen), Poly(ethylenvinylacetaten), Polyethylenterephthalaten, Polyvinylidenchloriden und mit Maleinsäureanhydrid gegrafteten Polyolefinen, enthält.

Enthält der Polymerfilm (P) genau eine erste Schicht der mindestens einen Polyamidzusammensetzung (PZ), gegebenenfalls als Blend mit mindestens einem weiteren Polymer (P2), und keine weitere Schicht, so wird der Polymerfilm (P) auch als Monolayerfilm bezeichnet.

Enthält der Polymerfilm (P) mindestens eine erste Schicht der mindestens einen Polyamidzusammensetzung (PZ) und mindestens eine weitere Schicht mindestens eines weiteren Polymers (P2), wird der Polymerfilm (P) auch als Multilayerfilm bezeichnet.

Beispielsweise enthält der Polymerfilm (P) dann 1 bis 5 erste Schichten der mindestens einen Polyamidzusammensetzung (PZ) und 1 bis 10 weitere Schichten des mindestens einen weiteren Polymers (P2), bevorzugt enthält der Polymerfilm (P) 1 bis 3 erste Schichten der mindestens einen Polyamidzusammensetzung (PZ) und 1 bis 8 weitere Schichten des mindestens einen weiteren Polymers (P2) und insbesondere bevorzugt enthält der Polymerfilm (P) 1 bis 2 erste Schichten der mindestens einen Polyamidzusammensetzung (PZ) und 1 bis 6 weitere Schichten des mindestens einen weiteren Polymers (P2).

Der Begriff "Polymerfilm (P)" umfasst im Rahmen der vorliegenden Erfindung also sowohl Monolayerfilme als auch Multilayerfilme.

Gegenstand der vorliegenden Erfindung ist daher auch ein Polymerfilm (P), wobei der Polymerfilm (P) ein Monolayerfilm oder ein Multilayerfilm ist.

Wie vorstehend beschrieben, weist der Polymerfilm (P) üblicherweise eine Dicke im Bereich von 0,1 µm bis 1 mm auf, bevorzugt im Bereich von 5 bis 500 µm und insbesondere bevorzugt im Bereich von 10 bis 100 µm.

Ist der Polymerfilm (P) ein Monolayerfilm, so weist die genau eine Schicht der mindestens einen Polyamidzusammensetzung (PZ) des Polymerfilms (P) üblicherweise dieselbe Dicke auf wie der Polymerfilm (P). Die Dicke der ersten Schicht der mindestens einen Polyamidzusammensetzung (PZ) liegt dann also beispielsweise im Bereich von 0,1 µm bis 1 mm, bevorzugt im Bereich von 5 bis 500 µm und insbesondere bevorzugt im Bereich von 10 bis 100 µm.

Ist der Polymerfilm (P) ein Multilayerfilm, so ist die Dicke der einzelnen Schichten des Polymerfilms (P), also ist die Dicke der mindestens einen ersten Schicht der mindestens einen Polyamidzusammensetzung (PZ) und die Dicke der mindestens einer weiteren Schicht des mindestens einen weiteren Polymers (P2) üblicherweise kleiner als die Dicke des Polymerfilms (P). Die Summe der Dicken der einzelnen Schichten entspricht dann im Allgemeinen der Dicke des Polymerfilms (P).

Beispielsweise weist die mindestens eine erste Schicht der mindestens einen Polyamidzusammensetzung (PZ) dann ein Dicke im Bereich von 0,1 bis 100 µm auf, bevorzugt im Bereich von 0,5 bis 50 µm und insbesondere bevorzugt im Bereich von 0,5 bis 10 µm.

Die mindestens eine weitere Schicht des mindestens einen weiteren Polymers (P2) weist dann beispielsweise eine Dicke im Bereich von 0,1 bis 100 µm auf, bevorzugt im Bereich von 0,5 bis 50 µm und insbesondere bevorzugt im Bereich von 0,5 bis 10 µm.

Der Polymerfilm (P) kann mindestens einen Haftvermittler enthalten. Diese Ausführungsform ist bevorzugt, wenn der Polymerfilm (P) ein Multilayerfilm ist.

"Mindestens ein Haftvermittler" bedeutet im Rahmen der vorliegenden Erfindung sowohl genau ein Haftvermittler als auch eine Mischung aus zwei oder mehreren Haftvermittlern.

Ist der Polymerfilm (P) ein Multilayerfilm, so kann der mindestens eine Haftvermittler zusammen mit der mindestens einen Polyamidzusammensetzung (PZ) in der mindestens einen ersten Schicht enthalten sein. In diesem Fall enthält die mindestens eine Polyamidzusammensetzung (PZ) den mindestens einen Haftvermittler. Ebenso ist es möglich, dass der mindestens eine Haftvermittler zusammen mit dem mindestens einen weiteren Polymer (P2) in der mindestens einen weiteren Schicht enthalten ist. Dann enthält das mindestens eine weitere Polymer (P2) den mindestens einen Haftvermittler. Darüber hinaus ist es möglich, dass der mindestens eine Haftvermittler als mindestens eine zusätzliche Schicht in dem Polymerfilm (P) enthalten ist. Diese Ausführungsform ist bevorzugt.

Wenn der mindestens eine Haftvermittler als mindestens eine zusätzliche Schicht in dem Polymerfilm (P) enthalten ist, so ist diese mindestens eine zusätzliche Schicht bevorzugt zwischen der mindestens einen weiteren Schicht des weiteren Polymers (P2) und der mindestens einen ersten Schicht der mindestens einen Polyamidzusammensetzung (PZ) angeordnet.

Geeignete Haftvermittler sind dem Fachmann als solche bekannt. Bevorzugt als Haftvermittler sind Copolymere aus Ethylen mit Maleinsäureanhydrid oder ein Copolymer aus Ethylen mit Vinylacetat. Bevorzugt ist ein Copolymer aus linear-low-density Polyethylen (LLDPE) und Maleinsäureanhydrid oder ein Copolymer aus Ethylen und Vinylacetat, wobei zur Herstellung des Copolymers > 18 Gew.-% Vinylacetat und < 82 Gew.-% Ethylen eingesetzt werden. Diese Copolymere sind kommerziell erhältlich, beispielsweise unter dem Handelsnamen *Bynel 4105* der Firma *DuPont* oder *Escorene FL00119* der Firma *Exxon.*

### Polyamidzusammensetzung (PZ)

Erfindungsgemäß enthält der Polymerfilm (P) mindestens eine Polyamidzusammensetzung (PZ), die die Komponenten
(A) 2 bis 30 Gew.-% mindestens eines amorphen Polyamids, hergestellt durch Polymerisation der Komponenten (A1), mindestens einer Dicarbonsäure, und (A2), mindestens einem Diamin, und
(B) 70 bis 98 Gew.-% mindestens eines teilkristallinen Polyamids,
   enthält, wobei die Komponente (A1) Isophthalsäure enthält und die Komponente (A2) 2-Methyl-1,5-Diaminopentan enthält und wobei die Gewichtsprozente jeweils bezogen sind auf die Summe der Gew.-% der Komponenten (A) und (B).
   Somit enthält der Polymerfilm (P) üblicherweise mindestens eine Polyamidzusammensetzung (PZ), die als Komponenten (A) im Bereich von 2 bis 30 Gew.-% mindestens eines amorphen Polyamids, das Einheiten enthält, die von mindestens einer Dicarbonsäure (A1), die Isophthalsäure umfasst, abgeleitet sind und Einheiten enthält, die von mindestens einem Diamin (A2), das 2-Methyl-1,5-Diaminopentan umfasst, abgeleitet sind, und die als Komponente (B) im Bereich von 70 bis 98 Gew.-% mindestens eines teilkristallinen Polyamids enthält, wobei die Gewichtsprozente jeweils bezogen sind auf die Summe der Gew.-% der Komponenten (A) und (B).
   Gegenstand der vorliegenden Erfindung ist somit auch ein Polymerfilm (P) enthaltend mindestens eine Polyamidzusammensetzung (PZ), die die Komponenten
   (A) im Bereich von 2 bis 30 Gew.-% mindestens eines amorphen Polyamids, das Einheiten enthält, die von mindestens einer Dicarbonsäure (A1), die Isophthalsäure umfasst, abgeleitet sind, und Einheiten enthält, die von mindestens einem Diamin (A2), das 2-Methyl-1,5-diaminopentan umfasst, abgeleitet sind,
   (B) im Bereich von 70 bis 98 Gew.-% mindestens eines teilkristallinen Polyamids,
enthält, wobei die Gewichtsprozente jeweils bezogen sind auf die Summe der Gewichtsprozente der Komponenten (A) und (B).

Die Begriffe "mindestens ein amorphes Polyamid (A)" und "Komponente (A)" werden im Rahmen der vorliegenden Erfindung synonym gebraucht und besitzen daher die gleiche Bedeutung.

Die Begriffe "mindestens ein teilkristallines Polyamid (B)" und "Komponente (B)" werden im Rahmen der vorliegenden Erfindung synonym gebraucht und besitzen daher die gleiche Bedeutung.

"Mindestens ein amorphes Polyamid (A)" bedeutet im Rahmen der vorliegenden Erfindung sowohl genau ein amorphes Polyamid (A), als auch eine Mischung aus zwei oder mehreren amorphen Polyamiden (A).

Entsprechendes gilt für "mindestens ein teilkristallines Polyamid (B)". "Mindestens ein teilkristallines Polyamid (B)" bedeutet im Rahmen der vorliegenden Erfindung sowohl genau ein teilkristallines Polyamid (B), als auch eine Mischung aus zwei oder mehreren teilkristallinen Polyamiden (B).

Erfindungsgemäß enthält die Polyamidzusammensetzung (PZ) 2 bis 30 Gew.-% des mindestens einen amorphen Polyamids (A), bevorzugt im Bereich von 2 bis 20 Gew.-% des mindestens einen amorphen Polyamids (A) und insbesondere bevorzugt im Bereich von 2 bis 15 Gew.-% des mindestens einen amorphen Polyamids (A), jeweils bezogen auf die Summe der Gewichtsprozente der Komponenten (A) und (B), bevorzugt bezogen auf das Gesamtgewicht der Polyamidzusammensetzung (PZ).

Die mindestens eine Polyamidzusammensetzung (PZ) enthält erfindungsgemäß im Bereich von 70 bis 98 Gew.-% des mindestens einen teilkristallinen Polyamids (B), bevorzugt im Bereich von 80 bis 98 Gew.-% und insbesondere bevorzugt im Bereich von 85 bis 98 Gew.-% des mindestens einen teilkristallinen Polyamids (B), jeweils bezogen auf die Summe der Gewichtsprozente der Komponenten (A) und (B), bevorzugt bezogen auf das Gesamtgewicht der mindestens einen Polyamidzusammensetzung (PZ).

Bevorzugt ergibt die Summe der Gewichtsprozente der Komponenten (A) und (B) 100 %.

Die mindestens eine Polyamidzusammensetzung (PZ) weist üblicherweise eine Glasübergangstemperatur (T_{G(PZ)}) auf. Die Glasübergangstemperatur (T_{G(PZ)}) liegt beispielsweise im Bereich von 20 bis 90 °C, bevorzugt im Bereich von 30 bis 80 °C und insbesondere bevorzugt im Bereich von 40 bis 70 °C bestimmt mittels ISO 11357-2:2014. Die Glasübergangstemperatur (T_{G(PZ)}) der mindestens einen Polyamidzusammensetzung (PZ) bezieht sich entsprechend der ISO 11357-2:2014, im Rahmen der vorliegenden Erfindung auf die Glasübergangstemperatur (T_{G(PZ)}) der trockenen Polyamidzusammensetzung (PZ). "Trocken" bedeutet im Rahmen der vorliegenden Erfindung, dass die mindestens eine Polyamidzusammensetzung (PZ) weniger als 1 Gew.-%, bevorzugt weniger als 0,5 Gew.-% und insbesondere bevorzugt weniger als 0,1 Gew.-% Wasser enthält, bezogen auf das Gesamtgewicht der mindestens einen Polyamidzusammensetzung (PZ). Mehr bevorzugt bedeutet "trocken", dass die mindestens eine Polyamidzusammensetzung (PZ) kein Wasser enthält und am meisten bevorzugt, dass die mindestens eine Polyamidzusammensetzung (PZ) kein Lösungsmittel enthält.

Die mindestens eine Polyamidzusammensetzung (PZ) weist darüber hinaus üblicherweise einen Schmelzpunkt (T_{M(PZ)}) auf. Der Schmelzpunkt (T_{M(PZ)}) der mindestens einen Polyamidzusammensetzung (PZ) liegt beispielsweise im Bereich von 130 bis 230 °C, bevorzugt im Bereich von 150 bis 220 °C und insbesondere bevorzugt im Bereich von 180 bis 215 °C bestimmt mittels ISO 11357-3: 2014.

Die mindestens eine Polyamidzusammensetzung (PZ) weist im Allgemeinen eine Viskositätszahl (VZ_{(PZ)}) im Bereich von 70 bis 350 ml/g auf, bestimmt in einer 0,5 Gew.-%igen Lösung der mindestens einen Polyamidzusammensetzung (PZ) in 96 Gew-%iger Schwefelsäure bei 25 °C. Die Viskositätszahl (VZ_{(PZ)}) der mindestens einen Polyamidzusammensetzung (PZ) liegt bevorzugt im Bereich von 100 bis 300 ml/g und insbesondere bevorzugt im Bereich von 150 bis 260 ml/g, bestimmt in einer 0,5 Gew.-%igen Lösung der mindestens einen Polyamidzusammensetzung (PZ) in 96 Gew-%iger Schwefelsäure bei 25 °C gemessen nach ISO 307:2013-08.

Die mindestens eine Polyamidzusammensetzung (PZ) kann darüber hinaus mindestens ein weiteres Polymer (P2) enthalten. Für das mindestens eine weitere Polymer (P2) gelten die zuvor beschriebenen Ausführungen und Bevorzugungen für das mindestens eine weitere Polymer (P2) entsprechend.

Bevorzugt enthält die mindestens eine Polyamidzusammensetzung (PZ) kein weiteres Polymer (P2).

Die mindestens eine Polyamidzusammensetzung (PZ) kann außerdem Additive enthalten. Derartige Additive sind dem Fachmann bekannt und beispielsweise ausgewählt aus der Gruppe bestehend aus Stabilisatoren, Farbstoffen, Antistaktika, Tackifiern, Anti-block, Verarbeitungshilfsmitteln, Antioxidantien, Lichtstabilisatoren, UV-Absorbern, Gleitmitteln und Nukleierungshilfsmitteln.

Geeignete Stabilisatoren, Farbstoffe, Antistatika, Tackifier, Anti-block, Verarbeitungshilfsmittel, Antioxidantien, Lichtstabilisatoren, UV-Absorber, Gleitmittel und Nukleierungshilfsmittel sind dem Fachmann als solche bekannt.

Als Farbstoffe sind organische und anorganische Pigmente, wie beispielsweise mit einer Schlichte versehenes Titandioxid, geeignet. Als Tackifier eignen sich beispielsweise Polyisobutylen (PIB) oder Ethylvinylacetat (EVA). Geeignete Antiblockmittel sind beispielsweise Siliziumdioxid oder Calciumcarbonatpartikel. Geeignete Lichtstabilisatoren sind beispielsweise sogenannte HALS (Hindered Amine Light Stabilizer). Als Verarbeitungshilfs- oder Gleitmittel kann beispielsweise Ethylenbisstearamid (EBS) Wachs eingesetzt werden. Nukleierungshilfsmittel können beispielsweise alle Arten von organischen oder anorganischen Kristallisationskeimbildnern sein, wie z.B. Talk.

### Komponente (A)

Die Komponente (A) ist mindestens ein amorphes Polyamid.

"Amorph" bedeutet im Rahmen der vorliegenden Erfindung, dass das Polyamid bei der dynamischen Differenzkalometrie *(differential scanning calorimetry; DSC)* gemessen gemäß ISO 11357 keinen Schmelzpunkt aufweist.

"Kein Schmelzpunkt" bedeutet, dass die Schmelzenthalpie ΔH2_{(A)} kleiner als 10 J/g, bevorzugt von kleiner als 8 J/g und insbesondere bevorzugt von kleiner als 5 J/g ist, jeweils gemessen mittels dynamischer Differenzkalometrie *(differential scanning calorimetry; DSC)* gemäß ISO 11357-4:2014.

Das erfindungsgemäße mindestens eine amorphe Polyamid (A) weist also üblicherweise eine Schmelzenthalpie ΔH2_{(A)} von kleiner als 10 J/g, bevorzugt von kleiner als 8 J/g und insbesondere bevorzugt von kleiner als 5 J/g auf, jeweils gemessen mittels dynamischer Differenzkalometrie *(differential scanning calorimetry;* DSC) gemäß ISO 11357-4:2014.

Geeignete amorphe Polyamide (A) weisen im Allgemeinen eine Viskositätszahl (VZ_{(A)}) im Bereich von 60 bis 200 ml/g, bevorzugt im Bereich von 70 bis 150 ml/g und insbesondere bevorzugt im Bereich von 75 bis 125 ml/g auf, bestimmt in einer 0,5 Gew.-%igen Lösung der Komponente (A), in 96 Gew.-%iger Schwefelsäure bei 25 °C gemäß ISO 307:2013-08.

Gegenstand der vorliegenden Erfindung ist somit auch ein Polymerfilm (P), bei dem die Komponente (A) eine Viskositätszahl (VZ_{(A)}) im Bereich von 60 bis 200 ml/g aufweist, bestimmt in einer 0,5 Gew.-%igen Lösung der Komponente (A) in 96 Gew.-%iger Schwefelsäure bei 25 °C.

Die erfindungsgemäße Komponente (A) weist üblicherweise eine Glasübergangstemperatur (T_{G(A)}) auf, wobei die Glasübergangstemperatur üblicherweise im Bereich von 130 bis 150 °C liegt, bevorzugt im Bereich von 133 bis 147 °C und insbesondere bevorzugt im Bereich von 135 bis 145 °C, bestimmt mittels ISO 11357-2:2014.

Gegenstand der vorliegenden Erfindung ist somit auch ein Polymerfilm (P), bei dem der Polymerfilm (P) die Komponente (A) eine Glasübergangstemperatur (T_{G(A)}) aufweist, wobei die Glasübergangstemperatur (T_{G(A)}) im Bereich von 130 bis 150 °C liegt.

Geeignete Komponenten (A) weisen ein gewichtsmittleres Molekulargewicht (M_{w(A)}) im Bereich von 5000 bis 35000 g/mol auf, bevorzugt im Bereich von 10000 bis 30000 g/mol und insbesondere bevorzugt im Bereich von 15000 bis 25000 g/mol. Das gewichtsmittlere Molekulargewicht wird bestimmt mittels SEC-MALLS *(Size Exclusion Chromatography-Multi-Angle Laser Light Scattering)* nach Chi-san Wu *"Handbook of size exclusion chromatography and related techniques", Seite 19.*

Das mindestens eine amorphe Polyamid (A) wird erfindungsgemäß hergestellt durch Polymerisation mindestens einer Dicarbonsäure (A1) und mindestens eines Diamins (A2), wobei die mindestens eine Dicarbonsäure (A1) Isophthalsäure enthält und das mindestens eine Diamin (A2) 2-Methyl-1,5-diaminopentan enthält.

Beispielsweise werden im Bereich von 45 bis 70 Gew.-% der mindestens einen Dicarbonsäure (A1) und im Bereich von 30 bis 55 Gew.-% des mindestens einen Diamins (A2) polymerisiert zur Herstellung des amorphen Polyamids (A), jeweils bezogen auf die Summe der Gewichtsprozente der Komponenten (A1) und (A2).

Bevorzugt werden im Bereich von 50 bis 65 Gew.-% der mindestens einen Dicarbonsäure (A1) und im Bereich von 35 bis 50 Gew.-% des mindestens einen Diamins (A2) polymerisiert zur Herstellung des amorphen Polyamids (A), jeweils bezogen auf die Summe der Gewichtsprozente der Komponenten (A1) und (A2).

Besonders bevorzugt werden im Bereich von 55 bis 60 Gew.-% der mindestens einen Dicarbonsäure (A1) und im Bereich von 40 bis 45 Gew.-% des mindestens einen Diamins (A2) polymerisiert zur Herstellung des amorphen Polyamids (A), jeweils bezogen auf die Summe der Gewichtsprozente der Komponenten (A1) und (A2).

Die Gewichtsprozente der Komponenten (A1) und (A2) beziehen sich auf die Komponenten (A1) und (A2) vor der Polymerisation, also auf die Gewichtsprozente der Komponenten (A1) und (A2) bevor die Komponenten (A1) und (A2) miteinander reagiert haben.

Die Gewichtsprozente der Komponenten (A1) und (A2) addieren sich bevorzugt zu 100 %.

Unter "mindestens eine Dicarbonsäure (A1)" wird im Rahmen der vorliegenden Erfindung sowohl genau eine Dicarbonsäure (A1) als auch eine Mischung aus zwei oder mehreren Dicarbonäuren (A1) verstanden. Erfindungsgemäß bevorzugt ist eine Mischung aus zwei oder mehreren Dicarbonsäuren.

Die Begriffe "mindestens eine Dicarbonsäure (A1)" und "Komponente (A1)" werden im Rahmen der vorliegenden Erfindung synonym gebraucht und besitzen daher die gleiche Bedeutung.

Erfindungsgemäß enthält die Komponente (A1) Isophthalsäure. Die Komponente (A1) kann aus Isophthalsäure bestehen. Erfindungsgemäß bevorzugt enthält die Komponente (A1) im Bereich von 20 bis 95 mol-% Isophthalsäure, besonders bevorzugt enthält die Komponente (A1) im Bereich von 25 bis 90 mol-% Isophthalsäure und insbesondere bevorzugt im Bereich von 30 bis 85 mol-% Isophthalsäure, jeweils bezogen auf die Gesamtstoffmenge der Komponente (A1).

Die Komponente (A1) kann darüber hinaus noch weitere Dicarbonsäuren enthalten, bevorzugt als weitere Dicarbonsäuren sind aromatische Dicarbonsäuren. Es ist also bevorzugt, dass die Komponente (A1) noch weitere aromatische Dicarbonsäuren enthält. Derartige aromatische Dicarbonsäuren sind dem Fachmann bekannt und beispielsweise ausgewählt aus der Gruppe bestehend aus Terephthalsäure und Phthalsäure, wobei Terephthalsäure bevorzugt ist.

Erfindungsgemäß bevorzugt enthält die Komponente (A1) Isophthalsäure und Terphthalsäure. Besonders bevorzugt besteht die Komponente (A1) aus Isophthalsäure und Terephthalsäure.

Beispielsweise enthält die Komponente (A1) im Bereich von 20 bis 95 mol-% Isophthalsäure und im Bereich von 5 bis 80 mol-% Terephthalsäure, jeweils bezogen auf die Gesamtstoffmenge der Komponente (A1).

Bevorzugt enthält die Komponente (A1) im Bereich von 25 bis 90 mol-% Isophthalsäure und im Bereich von 10 bis 75 mol-% Terephthalsäure, jeweils bezogen auf die Gesamtstoffmenge der Komponente (A1).

Besonders bevorzugt enthält die Komponente (A1) im Bereich von 30 bis 85 mol-% Isophthalsäure und im Bereich von 15 bis 70 mol-% Terephthalsäure, jeweils bezogen auf die Gesamtstoffmenge der Komponente (A1).

Gegenstand der vorliegenden Erfindung ist daher auch ein Polymerfilm (P), bei dem die Komponente (A1) im Bereich von 20 bis 95 mol-% Isophthalsäure und im Bereich von 5 bis 80 mol-% Terephthalsäure enthält, jeweils bezogen auf die Gesamtstoffmenge der Komponente (A1).

Unter "mindestens ein Diamin (A2)" wird im Rahmen der vorliegenden Erfindung sowohl genau ein Diamin (A2) als auch eine Mischung aus zwei oder mehreren Diaminen (A2) verstanden. Erfindungsgemäß bevorzugt ist genau ein Diamin (A2).

Die Begriffe "mindestens ein Diamin (A2)" und "Komponente (A2)" werden im Rahmen der vorliegenden Erfindung synonym gebraucht und besitzen daher die gleiche Bedeutung.

Die Komponente (A2) enthält erfindungsgemäß 2-Methyl-1,5-diaminopentan. Beispielsweise enthält die Komponente (A2) mindestens 20 mol-%, bevorzugt mindestens 50 mol-% und insbesondere bevorzugt mindestens 90 mol-% 2-Methyl-1,5-diaminopentan, jeweils bezogen auf die Gesamtstoffmenge der Komponente (A2). Am meisten bevorzugt besteht die Komponente (A2) aus 2-Methyl-1,5-diaminopentan.

Darüber hinaus kann die Komponente (A2) weitere Diamine enthalten. Geeignete weitere Diamine sind dem Fachmann als solche bekannt und beispielsweise Hexamethylendiamin.

Beispielsweise enthält die Komponente (A2) im Bereich von 20 bis 99,9 mol-% 2-Methyl-1,5-diaminopentan und im Bereich von 0,1 bis 80 mol-% Hexamethylendiamin, jeweils bezogen auf die Gesamtstoffmenge der Komponente (A2).

Besonders bevorzugt besteht die Komponente (A2) aus 2-Methyl-1,5-diaminopentan. Dann enthält die Komponente (A2) kein weiteres Diamin.

Es ist daher bevorzugt, dass die Komponente (A) ein amorphes Polyamid (A), das aus Isophthalsäure (Komponente (A1)) und 2-Methyl-1,5-diaminopentan (Komponente (A2)) hergestellt wird, enthält, besonders bevorzugt besteht die Komponente (A) aus diesem amorphen Polyamid (A). Die Komponente (A) enthält dann ein Poly(2-Methyl-1,5-pentamethylenisophthalamid), besonders bevorzugt besteht die Komponente (A) aus einem Poly(2-Methyl-1,5-pentamethylenisophthalamid).

Ebenso ist es bevorzugt, dass die Komponente (A) ein amorphes Polyamid (A), das aus Isophthalsäure und Terephthalsäure (Komponente (A1)) und 2-Methyl-1,5-diaminopentan (Komponente (A2)) hergestellt wird, enthält, besonders bevorzugt besteht die Komponente (A) aus diesem amorphen Polyamid (A). Die Komponente (A) enthält dann ein Poly(2-Methyl-1,5-pentamethylenaminisophthalamid-co-2-Methyl-1,5-pentamethylenterephthalamid), besonders bevorzugt besteht die Komponente (A) aus einem Poly(2-Methyl-1,5-pentamethylenaminisophthalamid-co-2-Methyl-1,5-pentamethylenterephthalamid).

Gegenstand der vorliegenden Erfindung ist daher auch ein Polymerfilm (P), bei dem die Komponente (A) ein Poly(2-Methyl-1,5-pentamethylenisophthalamid-co-2-Methyl-1,5-pentamethylenterephthalamid) enthält.

Die Komponente (A) wird hergestellt durch Polymerisation der Komponenten (A1) und (A2). Die Polymerisation der Komponenten (A1) und (A2) ist dem Fachmann bekannt. Üblicherweise ist die Polymerisation der Komponenten (A1) und (A2) eine Kondensationsreaktion.

Die Polymerisation der Komponenten (A1) und (A2) kann in Gegenwart eines Katalysators stattfinden.

Als Katalysator eignen sich alle dem Fachmann bekannten Katalysatoren, die die Polymerisation der Komponenten (A1) und (A2) katalysieren. Derartige Katalysatoren sind dem Fachmann bekannt. Bevorzugte Katalysatoren sind Phosphorverbindungen, wie beispielsweise Natriumhypophosphit, Phosphorige Säure, Triphenylphosphin oder Triphenylphosphit.

Bei der Polymerisation der Komponenten (A1) und (A2) wird das mindestens eine amorphe Polyamid (A) erhalten. Das mindestens eine amorphe Polyamid enthält daher Baueinheiten, die von der Komponente (A1) abgeleitet sind und Baueinheiten, die von der Komponente (A2) abgeleitet sind.

Es ist in einer Ausführungsform der vorliegenden Erfindung bevorzugt, dass das mindestens eine amorphe Polyamid (A) hergestellt wird durch Polymerisation der Komponenten (A1) und (A2) und zusätzlich einer Komponente (A3). Die Komponente (A3) ist mindestens ein weiteres Monomer, das ausgewählt ist aus der Gruppe bestehend aus Lactamen mit 4 bis 12 Kohlenstoffatomen und Monomergemischen (M), die mindestens eine lineare, aliphatische Dicarbonsäure mit 4 bis 12 Kohlenstoffatomen und mindestens ein lineares, aliphatisches Diamin mit 4 bis 12 Kohlenstoffatomen enthalten.

Gegenstand der vorliegenden Erfindung ist daher auch ein Polymerfilm (P), bei dem das mindestens eine amorphe Polyamid (A) hergestellt wird durch Polymerisation der Komponenten (A1) und (A2) und zusätzlich einer Komponente (A3), wobei die Komponente (A3) ausgewählt ist aus der Gruppe bestehend aus Lactamen mit 4 bis 12 Kohlenstoffatomen und Monomergemischen (M), die mindestens eine lineare, aliphatische Dicarbonsäure mit 4 bis 12 Kohlenstoffatomen und mindestens ein lineares, aliphatisches Diamin mit 4 bis 12 Kohlenstoffatomen enthalten.

"Mindestens eine lineare, aliphatische Dicarbonsäure" bedeutet im Rahmen der vorliegenden Erfindung, dass die mindestens eine lineare, aliphatische Dicarbonsäure keine Verzweigungen aufweist, dass die mindestens eine lineare, aliphatische Dicarbonsäure also keine Alkylsubstituenten aufweist.

Entsprechendes gilt für "mindestens ein lineares, aliphatisches Diamin". "Mindestens ein lineares, aliphatisches Diamin" bedeutet im Rahmen der vorliegenden Erfindung, dass das mindestens eine lineare, aliphatische Diamin keine Verzweigungen aufweist, dass das mindestens eine lineare, aliphatische Diamin also keine Alkylsubstituenten aufweist. Daher ist das mindestens eine lineare, aliphatische Diamin, das im Monomergemisch (M) enthalten ist, von dem in der Komponente (A2) enthaltenen 2-Methyl-1,5-diaminopentan verschieden.

Beispielsweise werden im Bereich von 38,5 bis 60 Gew.-% der Komponente (A1), im Bereich von 28 bis 45 Gew.-% der Komponente (A2) und im Bereich von 0,1 bis 30 Gew.-% der Komponente (A3) polymerisiert zur Herstellung des amorphen Polyamids (A), jeweils bezogen auf die Summe der Gewichtsprozente der Komponenten (A1), (A2) und (A3).

Bevorzugt werden im Bereich von 44 bis 60 Gew.-% der Komponente (A1), im Bereich von 32 bis 45 Gew.-% der Komponente (A2) und im Bereich von 0,1 bis 20 Gew.-% der Komponente (A3) polymerisiert zur Herstellung des amorphen Polyamids (A), jeweils bezogen auf die Summe der Gewichtsprozente der Komponenten (A1), (A2) und (A3).

Besonders bevorzugt werden im Bereich von 50 bis 60 Gew.-% der Komponente (A1), im Bereich von 35 bis 45 Gew.-% der Komponente (A2) und im Bereich von 0,1 bis 10 Gew.-% der Komponente (A3) polymerisiert zur Herstellung des amorphen Polyamids (A), jeweils bezogen auf die Summe der Gewichtsprozente der Komponenten (A1), (A2) und (A3).

"Mindestens ein weiteres Monomer" bedeutet im Rahmen der vorliegenden Erfindung sowohl genau ein weiteres Monomer als auch eine Mischung aus zwei oder mehreren weiteren Monomeren.

Die Begriffe "mindestens ein weiteres Monomer" und "Komponente (A3)" werden im Rahmen der vorliegenden Erfindung synonym gebraucht und besitzen daher die gleiche Bedeutung.

Erfindungsgemäß ist die Komponente (A3) ausgewählt aus der Gruppe bestehend aus Lactamen mit 4 bis 12 Kohlenstoffatomen und Monomergemischen (M).

Unter Lactamen werden erfindungsgemäß zyklische Amide verstanden, die im Ring 4 bis 12, bevorzugt 5 bis 8 Kohlenstoffatome aufweisen. Geeignete Lactame sind beispielsweise ausgewählt aus der Gruppe bestehend aus Propio-3-lactam (β-Lactam; β-Propiolactam), Butyro-4-lactam (γ-Lactam; γ-Butyrolactam), 2-Piperidinon, (δ-Lactam; δ-Valerolactam), Hexano-6-lactam (ε-Lactam; ε-Caprolactam), Heptano-7-lactam (ζ-Lactam; ζ-Heptanolactam), Oktano-8-lactam (η-Lactam; η-Oktanolactam), Nonano-9-lactam (θ-Lactam; θ-Nonanolactam), Dekano-10-lactam (ω-Dekanolactam), Undekano-11-lactam (ω-Undekanolactam) und Dodekano-12-lactam (ω-Dodekanolactam).

Die Lactame können unsubstituiert oder zumindest monosubstituiert sein. Für den Fall, dass zumindest monosubstituierte Lactame eingesetzt werden, können diese am Stickstoffatom und/oder an den Kohlenstoffatomen des Rings einen, zwei oder mehrere Substituenten tragen, die unabhängig voneinander ausgewählt sind aus der Gruppe bestehend aus C₁- bis C₁₀-Alkyl, C₅- bis C₆-Cycloalkyl und C₅- bis C₁₀-Aryl.

Als C₁- bis C₁₀-Alkylsubstituenten sind beispielsweise Methyl, Ethyl, Propyl, Isopropyl, n-Butyl, sec.-Butyl und tert.-Butyl geeignet. Ein geeigneter C₅- bis C₆-Cycloalkylsubstituent ist beispielsweise Cyclohexyl. Bevorzugte C₅- bis C₁₀-Arylsubstituenten sind Phenyl und Anthranyl.

Bevorzugt werden unsubstituierte Lactame eingesetzt, wobei γ-Lactam (γ-Butyrolactam), δ-Lactam (δ-Valerolactam) und ε-Lactam (ε-Caprolactam) bevorzugt sind. Besonders bevorzugt sind δ-Lactam (δ-Valerolactam) und ε-Lactam (ε-Caprolactam), wobei ε-Caprolactam insbesondere bevorzugt ist.

Das Monomergemisch (M) enthält erfindungsgemäß mindestens eine lineare, aliphatische Dicarbonsäure mit 4 bis 12 Kohlenstoffatomen und mindestens ein lineares aliphatisches Diamin mit 4 bis 12 Kohlenstoffatomen.

Als mindestens eine lineare, aliphatische Dicarbonsäure mit 4 bis 12 Kohlenstoffatomen eignen sich alle dem Fachmann bekannten linearen, aliphatischen Dicarbonsäuren mit 4 bis 12 Kohlenstoffatomen.

Beispielsweise ist die mindestens eine lineare, aliphatische Dicarbonsäure mit 4 bis 12 Kohlenstoffatomen ausgewählt aus der Gruppe bestehend aus Bernsteinsäure (Butandisäure), Glutarsäure (Pentandisäure), Adipinsäure (Hexandisäure), Pimelinsäure (Heptandisäure), Korksäure (Octandisäure), Azelainsäure (Nonandisäure), Sebacinsäure (Decandisäure), Undecandisäure und Dodecandisäure. Besonders bevorzugt als mindestens eine lineare, aliphatische Dicarbonsäure mit 4 bis 12 Kohlenstoffatomen ist Adipinsäure (Hexandisäure).

Als mindestens ein lineares, aliphatisches Diamin mit 4 bis 12 Kohlenstoffatomen eignen sich alle dem Fachmann bekannten linearen, aliphatischen Diamine mit 4 bis 12 Kohlenstoffatomen.

Das mindestens eine lineare, aliphatische Diamin mit 4 bis 12 Kohlenstoffatomen ist beispielsweise ausgewählt aus der Gruppe bestehend aus Butan-1,4-diamin, Pentamethylendiamin (Pentan-1,5-diamin), Hexamethylendiamin (Hexan-1,6-diamin), Heptan-1,7-diamin, Octan-1,8-diamin, Nonan-1,9-diamin, Decan-1,10-diamin, Undecan-1,11-diamin und Dodecan-1,12-diamin. Besonders bevorzugt als mindestens ein lineares, aliphatisches Diamin mit 4 bis 12 Kohlenstoffatomen ist Hexamethylendiamin (Hexan-1,6-diamin).

Die Polymerisation der Komponenten (A1) und (A2) und zusätzlich der Komponente (A3) ist dem Fachmann bekannt. Die Polymerisation der Komponenten (A1) und (A2) und zusätzlich der Komponente (A3) kann in Gegenwart eines Katalysators stattfinden. Für den Katalysator gelten die zuvor beschriebenen Ausführungen und Bevorzugungen für den Katalysator für die Polymerisation der Komponenten (A1) und (A2) entsprechend.

Wird die Komponente (A) hergestellt durch Polymerisation der Komponenten (A1) und (A2) und zusätzlich der Komponente (A3), so enthält die Komponente (A) Baueinheiten, die von der Komponente (A1) abgeleitet sind, Baueinheiten, die von der Komponente (A2) abgeleitet sind und Baueinheiten, die von der Komponente (A3) abgeleitet sind.

### Komponente (B)

Komponente (B) ist mindestens ein teilkristallines Polyamid.

"Teilkristallin" bedeutet im Rahmen der vorliegenden Erfindung, dass das Polyamid eine Schmelzenthalpie ΔH2_{(B)} von größer als 45 J/g, bevorzugt von größer als 50 J/g und insbesondere bevorzugt größer als 55 J/g aufweist, jeweils gemessen mittels dynamischer Differenzkalorimetrie (differential scanning calorimetry; DSC) gemäß ISO 11357-4:2014, aufweist.

Das erfindungsgemäße mindestens eine teilkristalline Polyamid (B) weist also üblicherweise eine Schmelzenthalpie ΔH2_{(B)} von größer als 45 J/g, bevorzugt von größer als 50 J/g und insbesondere bevorzugt größer als 55 J/g auf, jeweils gemessen mittels dynamischer Differenzkalorimetrie (differential scanning calorimetry; DSC) gemäß ISO 11357-4:2014.

Das erfindungsgemäße mindestens eine teilkristalline Polyamid (B) weist üblicherweise eine Schmelzenthalpie ΔH2_{(B} von weniger als 200 J/g, bevorzugt von weniger als 150 J/g und insbesondere bevorzugt von weniger als 100 J/g auf, jeweils gemessen mittels dynamischer Differenzkalorimetrie (differential scanning calorimetry; DSC) gemäß ISO 11357-4:2014.

Geeignete teilkristalline Polyamide (B) weisen im Allgemeinen eine Viskositätzahl (VZ_{(B)}) im Bereich von 90 bis 350 ml/g, vorzugsweise im Bereich von 180 bis 275 ml/g und insbesondere bevorzugt von 160 bis 250 ml/g auf, bestimmt in einer 0,5 Gew.-%igen Lösung von 96 Gew.-%iger Schwefelsäure bei 25 °C, gemessen gemäß ISO 307:2013-8.

Gegenstand der vorliegenden Erfindung ist somit auch ein Polymerfilm (P), bei dem die Komponente (B) eine Viskositätszahl (VZ_{(B)}) im Bereich von 90 bis 350 ml/g aufweist, bestimmt in einer 0,5 Gew.-%igen Lösung der Komponente (B) in 96 Gew.-%iger Schwefelsäure bei 25 °C.

Die erfindungsgemäße Komponente (B) weist üblicherweise eine Schmelztemperatur (T_{M(B)}) auf. Bevorzugt liegt die Schmelztemperatur (T_{M(B)}) der Komponente (B) im Bereich von 170 bis 230 °C, bevorzugt im Bereich von 180 bis 225 °C und insbesondere bevorzugt im Bereich von 185 bis 225 °C, bestimmt nach ISO 11357-3:2014.

Gegenstand der vorliegenden Erfindung ist somit auch ein Polymerfilm (P), bei dem die Komponente (B) eine Schmelztemperatur (T_{M(B)}) aufweist, wobei die Schmelztemperatur (T_{M(B)}) im Bereich von 170 bis 230 °C liegt.

Geeignete Komponenten (B) weisen ein gewichtsmittleres Molekulargewicht (M_{W(B)}) im Bereich von 500 bis 2 000 000 g/mol auf, bevorzugt im Bereich von 10000 bis 90000 g/mol und insbesondere bevorzugt im Bereich von 20000 bis 70000 g/mol. Das gewichtsmittlere Molekulargewicht (M_{W(B)}) wird bestimmt mittels SEC-MALLS (Size Exclusion Chromatography-Multi-Angle Laser Light Scattering) nach Chi-san Wu "Handbook of size exclusion chromatography and related techniques", Seite 19*.*

Als das mindestens eine teilkristalline Polyamid (B) sind beispielsweise teilkristalline Polyamide (B) geeignet, die sich von Lactamen mit 4 bis 12 Ringgliedern ableiten. Weiterhin sind teilkristalline Polyamide (B) geeignet, die durch Umsetzung von Dicarbonsäuren mit Diaminen erhalten werden. Als mindestens ein teilkristallines Polyamid (B), das sich von Lactam ableitet, sind beispielhaft Polyamide erwähnt, die sich von Polycaprolactam, Polycapryllactam und/oder Polylaurinlactam ableiten.

Für den Fall, dass mindestens ein teilkristallines Polyamid (B) eingesetzt wird, das aus Dicarbonsäuren und Diaminen erhältlich ist, können als Dicarbonsäuren, Alkandicarbonsäuren mit 6 bis 12 Kohlenstoffatomen eingesetzt werden. Darüber hinaus sind aromatische Dicarbonsäuren geeignet.

Beispielhaft seien hier Adipinsäure, Azelainsäure, Sebacinsäure und Dodecandicarbonsäure als Dicarbonsäuren genannt.

Als Diamine eignen sich beispielsweise Alkandiamine mit 4 bis 12 Kohlenstoffatomen sowie aromatische oder zyklische Diamine, wie beispielsweise m-Xylylendiamin, Di-(4-Aminophenyl)Methan, Di-(4-Aminocyclohexyl)-Methan, 2,2-Di-(4-aminophenyl)-Propan oder 2,2-Di-(4-Aminocyclohexyl)-Propan.

Bevorzugt als Komponente (B) sind Polycaprolactam (Polyamid 6) sowie Copolyamid 6/66 (Polyamid 6/6.6). Copolyamid 6/66 weist vorzugsweise einen Anteil von 5 bis 95 Gew.-% an Caprolactameinheiten auf, bezogen auf das Gesamtgewicht des Copolyamids 6/66.

Weiterhin als mindestens ein teilkristallines Polyamid (P) geeignet sind Polyamide, die durch Copolymerisation zweier oder mehrerer der vorstehend und nachstehend genannten Monomere erhältlich sind oder Mischungen mehrerer Polyamide, wobei das Mischungsverhältnis beliebig ist. Besonders bevorzugt sind Mischungen von Polyamid 6 mit anderen Polyamiden, insbesondere Copolyamid 6/66.

Die nachfolgende, nicht abschließende Aufstellung enthält die vorstehend genannten sowie weitere geeignete teilkristalline Polyamide (B) sowie die enthaltenen Monomere.

### AB-Polymere:

- PA 4: Pyrrolidon
- PA 6: ε-Caprolactam
- PA 7: Enantholactam
- PA 8: Capryllactam
- PA 9: 9-Aminopelargonsäure
- P 11: 11-Aminoundecansäure
- P 12: Laurinlactam

### AA/BB-Polymere:

- PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA MXD6: m-Xylyendiamin, Adipinsäure
- PA 6/66: (siehe PA 6 und PA 66)
- PA 6/12: (siehe PA 6 und PA 12)

Bevorzugt ist das mindestens eine teilkristalline Polyamid (B), ausgewählt aus der Gruppe bestehend aus Polyamid 6 und Polyamid 6/6.6.

Gegenstand der vorliegenden Erfindung ist somit auch ein Polymerfilm (P), bei dem die Komponente (B) ausgewählt ist aus der Gruppe bestehend aus Polyamid 6 und Polyamid 6/6.6.

### Herstellung des Polymerfilms (P)

Der erfindungsgemäße Polymerfilm (P) wird bevorzugt in einem Verfahren, das die folgenden Schritte umfasst, hergestellt.
i) Bereitstellen mindestens einer Polyamidzusammensetzung (PZ), die die Komponenten
   (A) 2 bis 30 Gew.-% mindestens einen amorphen Polyamids hergestellt durch Polymerisation der Komponenten
      (A1) mindestens eine Dicarbonsäure und
      (A2) mindestens ein Diamin und
   (B) 70 bis 98 Gew.-% mindestens eines teilkristallinen Polyamids
   enthält, wobei die Komponente (A1) Isophthalsäure enthält und die Komponente (A2) 2-Methyl-1,5-diaminopentan enthält und wobei die Gewichtsprozente jeweils bezogen sind auf die Summe der Gewichtsprozente der Komponenten (A) und (B), in geschmolzener Form in einem ersten Extruder,
ii) Extrusion der in Schritt i) bereitgestellten mindestens einen Polyamidzusammensetzung (PZ) in geschmolzener Form aus dem ersten Extruder durch eine Düse unter Erhalt eines Films der mindestens einen Polyamidzusammensetzung (PZ) in geschmolzener Form,
iii) Abkühlen des in Schritt ii) erhaltenen Films der mindestens einen Polyamidzusammensetzung (PZ) in geschmolzener Form, wobei die mindestens eine Polyamidzusammensetzung (PZ) erstarrt unter Erhalt des Polymerfilms (P).

Gegenstand der vorliegenden Erfindung ist somit auch ein Verfahren zur Herstellung des erfindungsgemäßen Polymerfilms (P), umfassend die Schritte
i) Bereitstellen mindestens einer Polyamidzusammensetzung (PZ), die die Komponenten
   (A) 2 bis 30 Gew.-% mindestens eines amorphen Polyamids hergestellt durch Polymerisation der Komponenten
      (A1) mindestens eine Dicarbonsäure und
      (A2) mindestens ein Diamin; und
   (B) 70 bis 98 Gew.-% mindestens eines teilkristallinen Polyamids;
      enthält, wobei die Komponente (A1) Isophthalsäure enthält und die Komponente (A2) 2-Methyl-1,5-diaminopentan enthält und wobei die Gewichtsprozente jeweils bezogen sind auf die Summe der Gewichtsprozente der Komponenten (A) und (B), in geschmolzener Form in einem ersten Extruder,
ii) Extrusion der in Schritt i) bereitgestellten mindestens einen Polyamidzusammensetzung (PZ) in geschmolzener Form aus dem ersten Extruder durch eine Düse unter Erhalt eines Films der mindestens einen Polyamidzusammensetzung (PZ) in geschmolzener Form,
iii) Abkühlen des in Schritt ii) erhaltenen Films der mindestens einen Polyamidzusammensetzung (PZ) in geschmolzener Form, wobei die mindestens eine Polyamidzusammensetzung (PZ) erstarrt unter Erhalt des Polymerfilms (P).

In Schritt i) wird die Polyamidzusammensetzung (PZ) in geschmolzener Form in einem ersten Extruder bereitgestellt.

"Ein erster Extruder" bedeutet im Rahmen der vorliegenden Erfindung sowohl genau ein erster Extruder, als auch zwei oder mehrere erste Extruder. Üblicherweise werden so viele erste Extruder eingesetzt, wie erste Schichten aus der mindestens einen Polyamidzusammensetzung (PZ) in dem Polymerfilm (P) enthalten sein sollen.

Soll der Polymerfilm (P) beispielsweise genau eine erste Schicht aus der mindestens einen Polyamidzusammensetzung (PZ) enthalten, so wird genau ein erster Extruder eingesetzt. Soll der Polymerfilm (P) genau zwei erste Schichten aus der mindestens einen Polyamidzusammensetzung (PZ) enthalten, so werden genau zwei erste Extruder eingesetzt. Soll der Polymerfilm (P) genau fünf erste Schichten aus der mindestens einen Polyamidzusammensetzung (PZ) enthalten, so werden genau fünf erste Extruder eingesetzt.

Beispielsweise werden 1 bis 5 erste Extruder eingesetzt, bevorzugt 1 bis 3 erste Extruder und besonders bevorzugt 1 bis 2 erste Extruder.

Für die mindestens eine Polyamidzusammensetzung (PZ) gelten die zuvor beschriebenen Ausführungen und Bevorzugungen für die mindestens eine Polyamidzusammensetzung (PZ) entsprechend.

Erfindungsgemäß wird die mindestens eine Polyamidzusammensetzung (PZ) in geschmolzener Form bereitgestellt. "In geschmolzener Form" bedeutet im Rahmen der vorliegenden Erfindung, dass die mindestens eine Polyamidzusammensetzung (PZ) bei einer Temperatur bereitgestellt wird, die oberhalb der Schmelztemperatur (T_{M(PZ)}) der mindestens einen Polyamidzusammensetzung (PZ) liegt. "In geschmolzener Form" bedeutet also, dass die mindestens eine Polyamidzusammensetzung (PZ) eine Temperatur aufweist, die oberhalb der Schmelztemperatur (T_{M(PZ)}) der mindestens einen Polyamidzusammensetzung (PZ) liegt. Liegt die mindestens eine Polyamidzusammensetzung (PZ) in geschmolzener Form vor, so ist die mindestens eine Polyamidzusammensetzung (PZ) fließfähig.

"Fließfähig" bedeutet, dass die mindestens eine Polyamidzusammensetzung (PZ) in dem ersten Extruder gefördert werden kann und dass die mindestens eine Polyamidzusammensetzung (PZ) aus dem ersten Extruder extrudiert werden kann.

Beispielsweise wird die mindestens eine Polyamidzusammensetzung (PZ) in Schritt i) bei einer Temperatur im Bereich von 150 bis 300 °C, bevorzugt im Bereich von 200 bis 290 °C und insbesondere bevorzugt im Bereich von 230 bis 280 °C, bereitgestellt, jeweils unter der Voraussetzung, dass die Temperatur bei der die mindestens eine Polyamidzusammensetzung (PZ) bereitgestellt wird, oberhalb der Schmelztemperatur (T_{M(PZ)}) der mindestens einen Polyamidzusammensetzung (PZ) liegt.

Die mindestens eine Polyamidzusammensetzung (PZ) kann nach allen dem Fachmann bekannten Methoden in geschmolzener Form in dem ersten Extruder bereitgestellt werden.

Beispielsweise kann die mindestens eine Polyamidzusammensetzung (PZ) in geschmolzener oder in fester Form dem ersten Extruder zugeführt werden. Wird die mindestens eine Polyamidzusammensetzung (PZ) dem ersten Extruder in fester Form zugeführt, so kann sie dem ersten Extruder beispielsweise als Granulat und/oder als Pulver zugeführt werden. Die mindestens eine Polyamidzusammensetzung (PZ) wird dann in dem ersten Extruder aufgeschmolzen und so in geschmolzener Form in dem ersten Extruder bereitgestellt.

Wird die mindestens eine Polyamidzusammensetzung (PZ) in geschmolzener oder in fester Form dem ersten Extruder zugeführt, so wird sie zuvor durch Mischen der Komponenten (A) und (B) sowie gegebenenfalls weiterer in der mindestens einen Polyamidzusammensetzung (PZ) enthaltener Komponenten hergestellt. Das Mischen der Komponenten (A) und (B) sowie gegebenenfalls weiterer in der mindestens einen Polyamidzusammensetzung (PZ) enthaltener Komponenten kann nach allen dem Fachmann bekannten Methoden erfolgen, beispielsweise in einem Extruder. Es versteht sich von selbst, dass der Extruder, in dem die Komponenten (A) und (B) zuvor vermischt werden zur Herstellung der mindestens einen Polyamidzusammensetzung (PZ) von dem ersten Extruder, in dem die mindestens eine Polyamidzusammensetzung (PZ) in geschmolzener Form bereitgestellt wird, verschieden sein kann.

Ebenso ist es möglich die mindestens eine Polyamidzusammensetzung (PZ) in dem ersten Extruder bereitzustellen, indem die in der mindestens einen Polyamidzusammensetzung (PZ) enthaltenen Komponenten (A) und (B) getrennt voneinander in geschmolzener Form in den ersten Extruder eingebracht werden und die Komponenten (A) und (B) dann miteinander in dem ersten Extruder compoundiert (vermischt) werden unter Erhalt der mindestens einen Polyamidzusammensetzung (PZ) in geschmolzener Form. Gegebenenfalls weitere in der mindestens einen Polyamidzusammensetzung (PZ) enthaltene Komponenten wie beispielsweise mindestens ein weiteres Polymer und/oder mindestens ein Haftvermittler können zusammen mit den Komponenten (A) und (B) oder getrennt von diesen in den ersten Extruder eingebracht werden.

Erfindungsgemäß bevorzugt wird die mindestens eine Polyamidzusammensetzung (PZ) bereitgestellt, indem die Komponenten (A) und (B) sowie gegebenenfalls weitere in der mindestens einen Polyamidzusammensetzung (PZ) enthaltene Komponenten zusammen oder getrennt voneinander in fester Form, beispielsweise als Granulat oder als Pulver in den ersten Extruder eingebracht werden. Die Komponenten (A) und (B), sowie gegebenenfalls weitere Komponenten werden dann in dem Extruder aufgeschmolzen und miteinander compoundiert (vermischt) unter Erhalt der mindestens einen Polyamidzusammensetzung (PZ) in geschmolzener Form in dem ersten Extruder.

In Schritt ii) wird die mindestens eine Polyamidzusammensetzung (PZ) in geschmolzener Form aus dem ersten Extruder durch eine Düse extrudiert unter Erhalt eines Films der mindestens einen Polyamidzusammensetzung (PZ) in geschmolzener Form.

"Eine Düse" bedeutet im Rahmen der vorliegenden Erfindung sowohl genau eine Düse als auch zwei oder mehrere Düsen. Erfindungsgemäß bevorzugt ist genau eine Düse.

Als Düse eignen sich alle dem Fachmann bekannten Düsen, die es ermöglichen einen Film aus der mindestens einen Polyamidzusammensetzung (PZ) in geschmolzener Form zu extrudieren. Derartige Düsen sind beispielsweise Ringdüsen oder Schlitzdüsen.

Geeignete Ringdüsen und Schlitzdüsen sind dem Fachmann als solche bekannt.

Wird beispielsweise der weiter unten beschriebene Schritt i1) durchgeführt, so ist es bevorzugt, dass in Schritt ii) die mindestens eine Polyamidzusammensetzung (PZ) in geschmolzener Form aus dem ersten Extruder mit dem mindestens einen weiteren Polymer (P2) in geschmolzener Form aus dem weiteren Extruder in der Düse, beispielsweise in der Ringdüse oder in der Schlitzdüse, zusammengeführt wird.

Insbesondere werden in Schritt ii) die mindestens eine Polyamidzusammensetzung (PZ) in geschmolzener Form aus dem ersten Extruder mit dem mindestens einen weiteren Polymer (P2) in geschmolzener Form aus dem weiteren Extruder so in der Düse zusammengeführt, dass der in Schritt ii) erhaltene Film, der mindestens einen Polyamidzusammensetzung (PZ) und des mindestens einen weiteren Polymers (P2), jeweils in geschmolzener Form, mindestens eine erste Schicht der mindestens einen Polyamidzusammensetzung (PZ) in geschmolzener Form und mindestens eine weitere Schicht des mindestens einen weiteren Polymers (P2) in geschmolzener Form enthält.

Beispielsweise liegt die Dicke des Film der mindestens einen Polyamidzusammensetzung (PZ) in geschmolzener Form im Bereich von 0,1 µm bis 1 mm, bevorzugt im Bereich von 5 bis 500 µm und insbesondere bevorzugt im Bereich von 20 bis 100 µm.

Der Film der mindestens einen Polyamidzusammensetzung (PZ) in geschmolzener Form kann beispielsweise ein Flachfilm oder ein Schlauchfilm sein. Ein Schlauchfilm wird üblicherweise erhalten, wenn als Düse eine Ringdüse eingesetzt wird, ein Flachfilm wird erhalten, wenn als Düse eine Schlitzdüse eingesetzt wird.

In Schritt iii) wird der in Schritt ii) erhaltene Film der mindestens einen Polyamidzusammensetzung (PZ) in geschmolzener Form abgekühlt. Dadurch erstarrt die mindestens eine Polyamidzusammensetzung (PZ) unter Erhalt des Polymerfilms (P).

Zum Abkühlen des Films der mindestens eine Polyamidzusammensetzung (PZ) in geschmolzener Form eigen sich alle dem Fachmann bekannten Methoden. Beispielsweise kann der Film der mindestens eine Polyamidzusammensetzung (PZ) in geschmolzener Form abgekühlt werden durch Luft- oder Wasserkühlung oder durch Kontakt mit einer kalten Oberfläche.

Der Film der mindestens einen Polyamidzusammensetzung (PZ) in geschmolzener Form wird in Schritt iii) beispielsweise auf eine Temperatur, die unterhalb der Schmelztemperatur (T_{M(PZ)}) der mindestens einen Polyamidzusammensetzung (PZ) liegt, abgekühlt unter Erhalt des Polymerfilms (P). Bevorzugt wird der Film der mindestens einen Polyamidzusammensetzung (PZ) in geschmolzener Form in Schritt iii) auf eine Temperatur, die unterhalb der Glasübergangstemperatur (T_{G(PZ)}) der mindestens einen Polyamidzusammensetzung (PZ) liegt, abgekühlt.

Beispielsweise wird der Film der mindestens einen Polyamidzusammensetzung (PZ) in geschmolzener Form auf eine Temperatur im Bereich von 0 bis 100 °C, bevorzugt im Bereich von 10 bis 80 °C und insbesondere bevorzugt im Bereich von 15 bis 70 °C abgekühlt, wobei die Temperatur, auf die der Film der mindestens einen Polyamidzusammensetzung (PZ) in geschmolzener Form abgekühlt wird, unterhalb der Schmelztemperatur (T_{M(PZ)}), bevorzugt unterhalb der Glasübergangstemperatur (T_{G(PZ)}) der mindestens einen Polyamidzusammensetzung (PZ) liegt.

Gegenstand der vorliegenden Erfindung ist daher auch ein Verfahren zur Herstellung eines Polymerfilms (P), bei dem in Schritt iii) der Film der mindestens einen Polyamidzusammensetzung (PZ) in geschmolzener Form auf eine Temperatur, die unterhalb der Schmelztemperatur (T_{M(PZ)}) der mindestens einen Polyamidzusammensetzung (PZ) liegt, abgekühlt wird.

Für den in Schritt iii) erhaltenen Polymerfilm (P) gelten die zuvor für den erfindungsgemäßen Polymerfilm (P) beschriebenen Ausführungen und Bevorzugungen entsprechend.

Die Schritte ii) und iii) können nacheinander oder gleichzeitig durchgeführt werden.

Bevorzugt wird zusätzlich ein Schritt i1) durchgeführt, in dem mindestens ein weiteres Polymer (P2) in geschmolzener Form in einem weiteren Extruder bereitgestellt wird.

Das Verfahren zur Herstellung des Polymerfilms (P) umfasst dann die folgenden Schritte:
i) Bereitstellen mindestens einer Polyamidzusammensetzung (PZ), die die Komponenten
   (A) 2 bis 30 Gew.-% mindestens einen amorphen Polyamids hergestellt durch Polymerisation der Komponenten
      (A1) mindestens eine Dicarbonsäure und
      (A2) mindestens ein Diamin und
   (B) 70 bis 98 Gew.-% mindestens eines teilkristallinen Polyamids
      enthält, wobei die Komponente (A1) Isophthalsäure enthält und die Komponente (A2) 2-Methyl-1,5-diaminopentan enthält und wobei die Gewichtsprozente jeweils bezogen sind auf die Summe der Gewichtsprozente der Komponenten (A) und (B), in geschmolzener Form in einem ersten Extruder,
i1) Bereitstellen mindestens eines weiteren Polymers (P2) in geschmolzener Form in einem weiteren Extruder,
ii) Extrusion der in Schritt i) bereitgestellten mindestens einen Polyamidzusammensetzung (PZ) in geschmolzener Form aus dem ersten Extruder durch eine Düse und Extrusion des in Schritt i1) bereitgestellten mindestens einen weiteren Polymers (P2) in geschmolzener Form aus dem weiteren Extruder durch die Düse unter Erhalt eines Films der mindestens einen Polyamidzusammensetzung (PZ) und des mindestens einen weiteren Polymers (P2), jeweils in geschmolzener Form,
iii) Abkühlen des in Schritt ii) erhaltenen Films der mindestens einen Polyamidzusammensetzung (PZ) und des mindestens einen weiteren Polymers (P2), jeweils in geschmolzener Form, wobei die mindestens eine Polyamidzusammensetzung (PZ) und/oder das mindestens eine weitere Polymer (P2) erstarrt unter Erhalt des Polymerfilms (P).

In Schritt i1) wird das mindestens eine weitere Polymer (P2) in geschmolzener Form in einem weiteren Extruder bereitgestellt.

"Ein weiterer Extruder" bedeutet im Rahmen der vorliegenden Erfindung sowohl genau ein weiterer Extruder als auch zwei oder mehrere weitere Extruder. Bevorzugt sind zwei oder mehrere weitere Extruder.

Bevorzugt werden so viele weitere Extruder eingesetzt wie weitere Schichten des mindestens einen weiteren Polymers (P2) im Polymerfilm (P) enthalten sein sollen. Beispielsweise werden 1 bis 10 weitere Extruder eingesetzt, bevorzugt 1 bis 8 weitere Extruder und insbesondere bevorzugt 1 bis 6 weitere Extruder.

Soll der Polymerfilm (P) beispielsweise genau eine weitere Schicht des mindestens einen weiteren Polymers (P2) enthalten, so wird genau ein weiterer Extruder eingesetzt. Soll der Polymerfilm (P) genau zwei weitere Schichten des mindestens einen weiteren Polymers (P2) enthalten, so werden genau zwei weitere Extruder eingesetzt. Soll der Polymerfilm (P) genau fünf weitere Schichten des mindestens einen weiteren Polymers (P2) enthalten, so werden genau fünf weitere Extruder eingesetzt.

Für den weiteren Extruder gelten die zuvor beschriebenen Ausführungen und Bevorzugungen für den ersten Extruder entsprechend.

Für das mindestens eine weitere Polymer (P2) gelten die zuvor beschriebenen Ausführungen und Bevorzugungen für das mindestens eine weitere Polymer (P2) entsprechend.

Erfindungsgemäß wird das mindestens eine weitere Polymer (P2) in Schritt i1) in geschmolzener Form bereitgestellt. "In geschmolzener Form" bedeutet, dass das mindestens eine weitere Polymer (P2) bei einer Temperatur, die oberhalb des Schmelzpunkts (T_{M(P2)}) des mindestens einen weiteren Polymers (P2) liegt, bereitgestellt wird. "in geschmolzener Form" bedeutet also, dass das mindestens eine weitere Polymer (P2) eine Temperatur aufweist, die oberhalb der Schmelztemperatur (T_{M(P2)}) des mindestens einen weiteren Polymers (P2) liegt. Liegt das mindestens eine weitere Polymer (P2) in geschmolzener Form vor, so ist das mindestens eine weitere Polymer (P2) fließfähig.

"Fließfähig" bedeutet, dass das mindestens eine weitere Polymer (P2) in dem weiteren Extruder gefördert werden kann und dass das mindestens eine weitere Polymer (P2) aus dem weiteren Extruder extrudiert werden kann.

Beispielsweise wird das mindestens eine weitere Polymer (P2) in Schritt i1) bei einer Temperatur im Bereich von 120 bis 350 °C, bevorzugt im Bereich von 130 bis 300 °C und insbesondere bevorzugt im Bereich von 140 bis 250 °C, bereitgestellt, jeweils unter der Voraussetzung, dass die Temperatur, bei der das mindestens eine weitere Polymer (P2) bereitgestellt wird, oberhalb der Schmelztemperatur (T_{M(P2)}) des mindestens einen weiteren Polymers (P2) liegt.

Das mindestens eine weitere Polymer (P2) kann nach allen dem Fachmann bekannten Methoden in dem weiteren Extruder in geschmolzener Form bereitgestellt werden.

Beispielsweise kann das mindestens eine weitere Polymer (P2) in geschmolzener oder in fester Form dem weiteren Extruder zugeführt werden. Wird das mindestens eine weitere Polymer (P2) dem weiteren Extruder in fester Form zugeführt, so kann es dem weiteren Extruder beispielsweise als Granulat und/oder als Pulver zugeführt werden. Das mindestens eine weitere Polymer (P2) wird dann in dem weiteren Extruder aufgeschmolzen und so in geschmolzener Form in dem weiteren Extruder bereitgestellt.

Schritt i1) wird üblicherweise gleichzeitig mit Schritt i) durchgeführt.

Für die Schritte i), ii) und iii) gelten die zuvor beschriebenen Ausführungen und Bevorzugungen für die Schritte i), ii) und iii).

Der in Schritt ii) erhaltene Film der mindestens einen Polyamidzusammensetzung (PZ) und des mindestens einen weiteren Polymers (P2), jeweils in geschmolzener Form, enthält die mindestens eine Polyamidzusammensetzung (PZ) als mindestens eine erste Schicht und das mindestens eine weitere Polymer (P2) als mindestens eine weitere Schicht. Üblicherweise enthält der in Schritt ii) erhaltene Film so viele erste Schichten der mindestens einen Polyamidzusammensetzung (PZ) in geschmolzener Fom wie erste Extruder in Schritt i) eingesetzt worden sind und so viele weitere Schichten des mindestens einen weiteren Polymers (P2) in geschmolzener Form wie weitere Extruder in Schritt i1) eingesetzt worden sind.

Es versteht sich von selbst, dass wenn Schritt i1) durchgeführt wird der in Schritt iii) erhaltene Polymerfilm (P) ein Multilayerfilm ist.

Bevorzugt wird der Polymerfilm (P) verstreckt. Der Polymerfilm (P) kann im Anschluss an Schritt iii) verstreckt werden, ebenso ist es möglich, den Polymerfilm (P) während Schritt iii), also während des Abkühlens des Films der mindestens einen Polyamidzusammensetzung (PZ) sowie gegebenenfalls des mindestens einen weiteren Polymers (P2), zu verstrecken.

Gegenstand der vorliegenden Erfindung ist daher auch ein Verfahren, bei dem zusätzlich der folgende Schritt durchgeführt wird:
iv) Verstrecken des Polymerfilms (P) unter Erhalt eines verstreckten Polymerfilms (vP).

Die Schritte iii) und iv) können nacheinander oder gleichzeitig durchgeführt werden.

Beim Verstrecken des Polymerfilms (P) richten sich die Polymerketten der in der mindestens einen Polyamidzusammensetzung (PZ) enthaltenen Komponente (B) aus und die Kristallinität der Komponente (B) kann erhöht werden.

Es ist darüber hinaus möglich, dass sich auch die Polymerketten des gegebenenfalls in dem Polymerfilm (P) enthaltenen mindestens einen weiteren Polymers (P2) beim Verstrecken ausrichten. Dadurch kann auch die Kristallinität des mindestens einen weiteren Polymers (P2) erhöht werden.

Das Verstrecken kann nach allen dem Fachmann bekannten Methoden erfolgen.

Beispielsweise kann der Polymerfilm (P) verstreckt werden, indem er über mindestens eine Rolle, bevorzugt ein Rollensystem, geführt wird oder indem er in seine Breite gedehnt wird. Wird der Polymerfilm (P) als Schlauch erhalten, so ist es ebenso möglich, dass der Polymerfilm (P) verstreckt wird, indem Luft in den Schlauch des Polymerfilms (P) eingeblasen wird und der Polymerfilm (P) dadurch verstreckt wird. Selbstverständlich sind auch Kombinationen der Verfahren möglich.

Wenn der Polymerfilm (P) über mindestens eine Rolle, bevorzugt über ein Rollensystem, geführt wird, so wird der Polymerfilm (P) in Extrusionsrichtung, also in seiner Länge verstreckt. Wird der Polymerfilm (P) dagegen in seiner Breite gedehnt, so wird er senkrecht zur Extrusionsrichtung verstreckt.

Wird der Polymerfilm (P) zum Verstrecken über mindestens eine Rolle, bevorzugt über ein Rollensystem, geführt, so richten sich die Polymerketten der Komponente (B) sowie gegebenenfalls des mindestens einen weiteren Polymers (P2) parallel zu der Richtung, in die verstreckt wird, aus. Der erhaltene verstreckte Polymerfilm (vP) ist dann uniaxial orientiert. Ebenso ist der erhaltene verstreckte Polymerfilm (vP) uniaxial orientiert, wenn der Polymerfilm (P) zum Verstrecken in seiner Breite gedehnt wird. Auch dann richten sich die Polymerketten der Komponente (B) sowie gegebenenfalls des mindestens einen weiteren Polymers (P2) parallel zu der Richtung, in die verstreckt wird, aus.

"uniaxial orientiert" bedeutet, dass die Polymerketten im Wesentlichen in eine Richtung ausgerichtet sind.

Wird der Polymerfilm (P) zum Verstrecken über ein Rollensystem geführt und in seiner Breite gedehnt, so richten sich die Polymerketten der Komponente (B) sowie gegebenenfalls des mindestens einen weiteren Polymers (P2) parallel zu beiden Richtungen, in die verstreckt wird, aus. Der erhaltene verstreckte Polymerfilm (vP) ist dann biaxial orientiert.

"biaxial orientiert" bedeutet, dass die Polymerketten im Wesentlichen in zwei verschiedene, bevorzugt senkrecht zueinander stehende Richtungen ausgerichtet sind.

Wird der Polymerfilm (P) als Schlauch erhalten und der Polymerfilm (P) verstreckt, indem Luft in den Schlauch des Polymerfilms (P) eingeblasen wird, so ist der erhaltene verstreckte Polymerfilm (vP) uniaxial orientiert.

Werden die vorstehend beschriebenen Verfahren zum Verstrecken des Polymerfilms (P) kombiniert, wird der Polymerfilm (P) also beispielsweise als Schlauch erhalten und der Polymerfilm (P) verstreckt, indem Luft in den Schlauch des Polymerfilms (P) eingeblasen wird und gleichzeitig über Rollen geführt und dabei ebenfalls verstreckt, so ist der erhaltene verstreckte Polymerfilm (vP) biaxial orientiert.

Der Polymerfilm (P) wird üblicherweise bei einer Temperatur verstreckt, die oberhalb der Glasübergangstemperatur (T_{G(PZ)}) der mindestens einen Polyamidzusammensetzung (PZ) liegt und die unterhalb der Schmelztemperatur (T_{M(PZ}) der mindestens einen Polyamidzusammensetzung (PZ) liegt. Ist der Polymerfilm (P) ein Multilayerfilm, so ist es außerdem bevorzugt, dass der Polymerfilm (P) bei einer Temperatur verstreckt wird, die unterhalb der Schmelztemperatur des mindestens einen weiteren Polymers (P2) liegt, insbesondere bevorzugt bei einer Temperatur, die unterhalb der Schmelztemperatur des bei der niedrigsten Temperatur schmelzenden mindestens einen weiteren Polymers (P2) liegt.

Der erfindungsgemäße Polymerfilm (P) kann beispielsweise in einem Castverfahren, in einem Blasverfahren, in einem biaxially oriented polyamidefilm-Verfahren (BOPA-Verfahren) oder in einem Multiblasverfahren hergestellt werden.

Gegenstand der vorliegenden Erfindung ist daher auch ein Polymerfilm (P), der in einem Castverfahren, in einem Blasverfahren, in einem Biaxially-oriented Polyamide Film-Verfahren oder in einem Multiblasverfahren hergestellt wird.

Das Castverfahren, das Blasverfahren, das biaxially oriented polyamidefilm-Verfahren und das Multiblasverfahren sind dem Fachmann als solche bekannt. Üblicherweise wird der Polymerfilm (P) bei diesen Verfahren verstreckt, sodass ein verstreckter Polymerfilm (vP) erhalten wird.

Ein Castverfahren zur Herstellung des Polymerfilms (P) umfasst bevorzugt die folgenden Schritte i-c) bis iv-c):
i-c) Bereitstellen mindestens einer Polyamidzusammensetzung (PZ), die die Komponenten
   (A) 2 bis 30 Gew.-% mindestens eines amorphen Polyamids hergestellt durch Polymerisation der Komponenten
      (A1) mindestens eine Dicarbonsäure und
      (A2) mindestens ein Diamin; und
   (B) 70 bis 98 Gew.-% mindestens eines teilkristallinen Polyamids;
      enthält, wobei die Komponente (A1) Isophthalsäure enthält und die Komponente (A2) 2-Methyl-1,5-diaminopentan enthält und wobei die Gewichtsprozente jeweils bezogen sind auf die Summe der Gewichtsprozente der Komponenten (A) und (B), in geschmolzener Form in einem ersten Extruder,
ii-c) Extrusion der in Schritt i-c) bereitgestellten mindestens einen Polyamidzusammensetzung (PZ) in geschmolzener Form aus dem ersten Extruder durch eine Düse unter Erhalt eines Films der mindestens einen Polyamidzusammensetzung (PZ) in geschmolzener Form,
iii-c) Abkühlen des in Schritt ii-c) erhaltenen Films der mindestens einen Polyamidzusammensetzung (PZ) in geschmolzener Form, wobei die mindestens eine Polyamidzusammensetzung (PZ) erstarrt unter Erhalt des Polymerfilms (P),
iv-c) Verstrecken des in Schritt iii-c) erhaltenen Polymerfilms (P), indem der Polymerfilm (P) über mindestens eine Rolle, bevorzugt über ein Rollensystem, geführt wird unter Erhalt eines verstreckten Polymerfilms (vP).

Für die Schritte i-c) bis iii-c) des Castverfahrens gelten die zuvor beschriebenen Ausführungen und Bevorzugungen für die Schritte i) bis iii) des Verfahrens zur Herstellung des Polymerfilms (P) entsprechend.

Die beim Castverfahren in Schritt ii-c) eingesetzte Düse ist üblicherweise eine Schlitzdüse. Der in Schritt ii-c) erhaltene Film der mindestens einen Polyamidzusammensetzung (PZ) in geschmolzener Form ist daher vorzugsweise ein Flachfilm sodass der in Schritt iii-c) erhaltene Polymerfilm (P) sowie der in Schritt iv-c) erhaltene verstreckte Polymerfilm (vP) vorzugsweise eine Flachfolie ist.

Beim Castverfahren können die Schritte iii-c) und iv-c) nacheinander oder gleichzeitig durchgeführt werden. Bevorzugt werden beim Castverfahren die Schritte iii-c) und iv-c) gleichzeitig durchgeführt, insbesondere bevorzugt werden die Schritte iii-c) und iv-c) gleichzeitig und direkt nach ii-c) durchgeführt.

Es ist außerdem bevorzugt, dass beim Castverfahren die in Schritt iv-c) eingesetzte mindestens eine Rolle, bevorzugt das Rollensystem, während Schritt iv-c) gekühlt wird.

Ein Blasverfahren zur Herstellung des Polymerfilms (P) umfasst bevorzugt die folgenden Schritte i-b) bis iv-b):
i-b) Bereitstellen mindestens einer Polyamidzusammensetzung (PZ), die die Komponenten
   (A) 2 bis 30 Gew.-% mindestens eines amorphen Polyamids hergestellt durch Polymerisation der Komponenten
      (A1) mindestens eine Dicarbonsäure und
      (A2) mindestens ein Diamin; und
   (B) 70 bis 98 Gew.-% mindestens eines teilkristallinen Polyamids;
      enthält, wobei die Komponente (A1) Isophthalsäure enthält und die Komponente (A2) 2-Methyl-1,5-diaminopentan enthält und wobei die Gewichtsprozente jeweils bezogen sind auf die Summe der Gewichtsprozente der Komponenten (A) und (B), in geschmolzener Form in einem ersten Extruder,
ii-b) Extrusion der in Schritt i-b) bereitgestellten mindestens einen Polyamidzusammensetzung (PZ) in geschmolzener Form aus dem ersten Extruder durch eine Düse, die eine Ringdüse ist, unter Erhalt eines Schlauchfilms der mindestens einen Polyamidzusammensetzung (PZ) in geschmolzener Form,
iii-b) Abkühlen des in Schritt ii-b) erhaltenen Schlauchfilms der mindestens einen Polyamidzusammensetzung (PZ) in geschmolzener Form, wobei die mindestens eine Polyamidzusammensetzung (PZ) erstarrt unter Erhalt des Polymerfilms (P),
iv-b) Verstrecken des in Schritt iii-b) erhaltenen Polymerfilms (P), indem Luft in den Schlauch des Polymerfilms (P) geblasen wird unter Erhalt eines verstreckten Polymerfilms (vP).

Für die Schritte i-b) bis iii-b) des Blasverfahrens gelten die zuvor beschriebenen Ausführungen und Bevorzugungen für die Schritte i) bis iii) des Verfahrens zur Herstellung des Polymerfilms (P) entsprechend.

Als Düse in Schritt ii-b) des Blasverfahrens wird bevorzugt ein Stack-Die, ein Helical Distributor Die oder eine Mischform daraus eingesetzt. Diese Düsen sind dem Fachmann bekannt und beispielsweise in *"*Blown Film Extrusion" von Kirk Cantor, 2nd Edition, Carl Hanser Verlag, Munich 2011 beschrieben.

Die Schritte iii-b) und iv-b) können beim Blasverfahren gleichzeitig oder nacheinander durchgeführt werden. Bevorzugt werden beim Blasverfahren die Schritte iii-b) und iv-b) gleichzeitig durchgeführt.

Ein biaxially oriented polyamidefilm-Verfahren zur Herstellung des Polymerfilms (P) umfasst bevorzugt die folgenden Schritte i-o) bis iv-o):
i-o) Bereitstellen mindestens einer Polyamidzusammensetzung (PZ), die die Komponenten
   (A) 2 bis 30 Gew.-% mindestens eines amorphen Polyamids hergestellt durch Polymerisation der Komponenten
      (A1) mindestens eine Dicarbonsäure und
      (A2) mindestens ein Diamin; und
   (B) 70 bis 98 Gew.-% mindestens eines teilkristallinen Polyamids
      enthält, wobei die Komponente (A1) Isophthalsäure enthält und die Komponente (A2) 2-Methyl-1,5-diaminopentan enthält und wobei die Gewichtsprozente jeweils bezogen sind auf die Summe der Gewichtsprozente der Komponenten (A) und (B), in geschmolzener Form in einem ersten Extruder,
ii-o) Extrusion der in Schritt i-o) bereitgestellten mindestens einen Polyamidzusammensetzung (PZ) in geschmolzener Form aus dem ersten Extruder durch eine Düse unter Erhalt eines Films der mindestens einen Polyamidzusammensetzung (PZ) in geschmolzener Form,
iii-o) Abkühlen des in Schritt ii-o) erhaltenen Films der mindestens einen Polyamidzusammensetzung (PZ) in geschmolzener Form, wobei die mindestens eine Polyamidzusammensetzung (PZ) erstarrt unter Erhalt des Polymerfilms (P),
iv-o) Verstrecken des in Schritt iii-o) erhaltenen Polymerfilms (P), indem der Polymerfilm (P) über mindestens eine Rolle, bevorzugt ein Rollensystem, geführt wird und in seiner Breite gedehnt wird, unter Erhalt des verstreckten Polymerfilms (vP).

Für die Schritte i-o) bis iii-o) des biaxially oriented polyamidefilm-Verfahren gelten die zuvor beschriebenen Ausführungen und Bevorzugungen für die Schritte i) bis iii) des Verfahrens zur Herstellung des Polymerfilms (P) entsprechend.

Die beim biaxially oriented polyamidefilm-Verfahren in Schritt ii-o) eingesetzte Düse ist üblicherweise eine Schlitzdüse. Der in Schritt ii-o) erhaltene Film der mindestens einen Polyamidzusammensetzung (PZ) in geschmolzener Form ist daher vorzugsweise ein Flachfilm sodass der in Schritt iii-o) erhaltene Polymerfilm (P) sowie der in Schritt iv-o) erhaltene verstreckte Polymerfilm (vP) vorzugsweise eine Flachfolie ist.

Beim biaxially oriented polyamidefilm-Verfahren können die Schritte iii-o) und iv-o) nacheinander oder gleichzeitig durchgeführt werden, bevorzugt werden die Schritte iii-o) und iv-o) nacheinander durchgeführt. Insbesondere bevorzugt werden beim biaxially oriented polyamidefilm-Verfahren die Schritte iii-o) und iv-o) nacheinander durchgeführt und der in Schritt iii-o) erhaltene Polymerfilm (P) vor Schritt iv-o) erwärmt. Dabei ist es bevorzugt, dass der Polymerfilm (P) vor Schritt iv-o) auf eine Temperatur erwärmt wird, die oberhalb der Glasübergangstemperatur (T_{G(PZ)}) der im Polymerfilm (P) enthaltenen mindestens einen Polyamidzusammensetzung (PZ) liegt und die unterhalb der Schmelztemperatur (T_{M(PZ)}) der im Polymerfilm (P) enthaltenen mindestens einen Polyamidzusammensetzung (PZ) liegt. Der Polymerfilm (P) wird dann bevorzugt in Schritt iv-o) bei der Temperatur verstreckt, auf die er vor Schritt iv-o) erwärmt wird.

Ein Multiblasverfahren zur Herstellung des Polymerfilms (P) umfasst bevorzugt die folgenden Schritte i-m) bis iv-m):
i-m) Bereitstellen mindestens einer Polyamidzusammensetzung (PZ), die die Komponenten
   (A) 2 bis 30 Gew.-% mindestens eines amorphen Polyamids hergestellt durch Polymerisation der Komponenten
      (A1) mindestens eine Dicarbonsäure und
      (A2) mindestens ein Diamin; und
   (B) 70 bis 98 Gew.-% mindestens eines teilkristallinen Polyamids;
      enthält, wobei die Komponente (A1) Isophthalsäure enthält und die Komponente (A2) 2-Methyl-1,5-diaminopentan enthält und wobei die Gewichtsprozente jeweils bezogen sind auf die Summe der Gewichtsprozente der Komponenten (A) und (B), in geschmolzener Form in einem ersten Extruder,
ii-m) Extrusion der in Schritt i-m) bereitgestellten mindestens einen Polyamidzusammensetzung (PZ) in geschmolzener Form aus dem ersten Extruder durch eine Düse, die eine Ringdüse ist, unter Erhalt eines Schlauchfilms der mindestens einen Polyamidzusammensetzung (PZ) in geschmolzener Form,
iii-m) Abkühlen des in Schritt ii-m) erhaltenen Schlauchfilms der mindestens einen Polyamidzusammensetzung (PZ) in geschmolzener Form, wobei die mindestens eine Polyamidzusammensetzung (PZ) erstarrt unter Erhalt des Polymerfilms (P),
iv-m) Verstrecken des in Schritt iii-m) erhaltenen Polymerfilms (P), indem Luft in den Schlauch des Polymerfilms geblasen wird und indem gleichzeitig der Polymerfilm (P) über mindestens eine Rolle, bevorzugt ein Rollensystem, geführt wird unter Erhalt eines verstreckten Polymerfilms (vP).

Für die Schritte i-m) bis iii-m) des Multiblasverfahrens gelten die zuvor beschriebenen Ausführungen und Bevorzugungen für die Schritte i) bis iii) des Verfahrens zur Herstellung des Polymerfilms (P) entsprechend.

Bevorzugt wird der Schlauchfilm der mindestens einen Polyamidzusammensetzung (PZ) in geschmolzener Form in Schritt iii-m) in einem Wasserbad abgekühlt.

Beim Multiblasverfahren können die Schritte iii-m) und iv-m) gleichzeitig oder nacheinander durchgeführt werden, bevorzugt werden die Schritte iii-m) und iv-m) nacheinander durchgeführt. Insbesondere bevorzugt werden die Schritte iii-m) und iv-m) nacheinander durchgeführt und der in Schritt iii-m) erhaltene Polymerfilm (P) vor Schritt iv-m) erwärmt. Dabei ist es bevorzugt, dass der Polymerfilm (P) vor Schritt iv-m) auf eine Temperatur erwärmt wird, die oberhalb der Glasübergangstemperatur (T_{G(PZ)}) der in dem Polymerfilm (P) enthaltenen mindestens einen Polyamidzusammensetzung (PZ) liegt und die unterhalb der Schmelztemperatur (T_{M(PZ)}) der in dem Polymerfilm (P) enthaltenen mindestens einen Polyamidzusammensetzung (PZ) liegt. Der Polymerfilm (P) wird dann bevorzugt in Schritt iv-m) bei der Temperatur verstreckt, auf die er vor Schritt iv-m) erwärmt wird.

Es versteht sich von selbst, dass in dem Castverfahren, in dem Blasverfahren, in dem biaxially oriented polyamidefilm-Verfahren und in dem Multiblasverfahren gegebenenfalls ebenfalls Schritt i1), in dem mindestens ein weiteres Polymer (P2) in einem weiteren Extruder in geschmolzener Form bereitgestellt wird, durchgeführt werden kann und dass dann entsprechend Schritt ii) des Verfahrens zur Herstellung des Polymerfilms (P) in Schritt ii-c), in Schritt ii-b), in Schritt ii-o) und in Schritt ii-m) ein Film der mindestens einen Polyamidzusammensetzung (PZ) und des mindestens einen weiteren Polymers (P2), jeweils in geschmolzener Form erhalten wird und dieser entsprechend Schritt iii) des Verfahrens zur Herstellung des Polymerfilms (P) in Schritt iii-c), in Schritt iii-b), in Schritt iii-o) und in Schritt iii-m) abgekühlt wird.

Für den gegebenenfalls durchgeführten Schritt i1) gelten die zuvor beschriebenen Ausführungen und Bevorzugungen für den gegebenenfalls durchgeführten Schritt i1) des Verfahrens zur Herstellung des Polymerfilms (P) entsprechend.

Bevorzugt wird bei dem biaxially oriented polyamidefilm-Verfahren kein Schritt i1) durchgeführt. Bevorzugt wird bei dem biaxially oriented polyamidefilm-Verfahren also kein weiteres Polymer (P2) in einem weiteren Extruder bereitgestellt.

### Verpacken von Lebensmitteln

Der erfindungsgemäße Polymerfilm (P) kann in einem Verfahren zum Verpacken von Lebensmitteln eingesetzt werden.

Gegenstand der vorliegenden Erfindung ist daher auch die Verwendung des erfindungsgemäßen Polymerfilms (P) zum Verpacken von Lebensmitteln.

Beispielsweise umfasst das Verfahren zum Verpacken von Lebensmitteln die folgenden Schritte:
a) Bereitstellen eines Lebensmittels, das von mindesten einem erfindungsgemäßen Polymerfilm (P) umhüllt ist, wobei der mindestens eine Polymerfilm (P) eine erste Temperatur (T1) aufweist,
b) Erwärmen des mindestens einen Polymerfilms (P) auf eine zweite Temperatur (T2), die im Bereich von 60 bis 150 °C liegt, wodurch der mindestens eine Polymerfilm (P) schrumpft unter Erhalt des Lebensmittels, das von dem mindestens einen geschrumpften Polymerfilm (P) umhüllt ist.

Gegenstand der vorliegenden Erfindung ist daher auch ein Verfahren zum Verpacken von Lebensmitteln umfassend die Schritte:
a) Bereitstellen eines Lebensmittels, das von mindestens einem Polymerfilm (P) gemäß einem der Ansprüche 1 bis 13 umhüllt ist, wobei der mindestens eine Polymerfilm (P) eine erste Temperatur (T1) aufweist,
b) Erwärmen des mindestens einen Polymerfilms (P) auf eine zweite Temperatur (T2), die im Bereich von 60 bis 150 °C liegt, wodurch der mindestens eine Polymerfilm (P) schrumpft, unter Erhalt des Lebensmittels, das von dem mindestens einen geschrumpften Polymerfilm (P) umhüllt ist.

In Schritt a) wird das Lebensmittel bereitgestellt, das von mindestens einem Polymerfilm (P) umhüllt ist.

Für den Polymerfilm (P) gelten die zuvor beschriebenen Ausführungen und Bevorzugungen für den Polymerfilm (P) entsprechend.

Bevorzugt wird als Polymerfilm (P) in dem Verfahren zum Verpacken von Lebensmitteln mindestens ein verstreckter Polymerfilm (vP) eingesetzt. Für den mindestens einen verstreckten Polymerfilm (vP) gelten die zuvor beschriebenen Ausführungen und Bevorzugungen für den verstreckten Polymerfilm (vP) entsprechend.

Als Lebensmittel eignen sich alle bekannten Lebensmittel, insbesondere geeignet sind Käseprodukte, Fleischprodukte und Wurstprodukte.

"Von dem mindestens einen Polymerfilm (P) umhüllt" bedeutet im Rahmen der vorliegenden Erfindung, dass mindestens 50 %, bevorzugt mindestens 80 % und insbesondere bevorzugt 100 % der Oberfläche des Lebensmittels von dem mindestens einen Polymerfilm (P) bedeckt sind. "bedeckt" bedeutet, dass der mindestens eine Polymerfilm (P) und die Oberfläche des Lebensmittels miteinander in direktem Kontakt stehen können, ebenso ist es möglich, dass sich zwischen der Oberfläche des Lebensmittels und dem mindestens einen Polymerfilm (P) zumindest teilweise Luft befindet.

Der mindestens eine Polymerfilm (P) weist in Schritt a) eine erste Temperatur (T1) auf. Die erste Temperatur (T1) liegt bevorzugt unterhalb der Glasübergangstemperatur (T_{G(PZ)}) der in dem mindestens einen Polymerfilm (P) enthaltenen mindestens einen Polyamidzusammensetzung (PZ). Beispielsweise weist der mindestens eine Polymerfilm (P) eine erste Temperatur (T1) auf, die im Bereich von -10 bis 50 °C liegt, bevorzugt im Bereich von 0 bis 40 °C und insbesondere bevorzugt im Bereich von 10 bis 30 °C.

Gegenstand der vorliegenden Erfindung ist daher auch ein Verfahren zum Verpacken von Lebensmitteln, wobei die erste Temperatur (T1) unterhalb der Glasübergangstemperatur (T_{G(PZ)}) der in dem mindestens einen Polymerfilm (P) enthaltenen mindestens einen Polyamidzusammensetzung (PZ) liegt.

Gegenstand der vorliegenden Erfindung ist außerdem ein Verfahren zum Verpacken von Lebensmitteln, wobei die erste Temperatur (T1) im Bereich von -10 bis 50 °C liegt.

In Schritt b) wird der mindestens eine Polymerfilm (P) auf eine zweite Temperatur (T2) erwärmt. Die zweite Temperatur (T2) liegt daher oberhalb der ersten Temperatur (T1) des Polymerfilms (P).

Bevorzugt liegt die zweite Temperatur (T2) oberhalb der Glasübergangstemperatur (T_{G(PZ)}) der in dem mindestens einen Polymerfilm (P) enthaltenen mindestens einen Polyamidzusammensetzung (PZ). Beispielsweise liegt die zweite Temperatur (T2) im Bereich von 60 bis 150 °C, bevorzugt im Bereich von 80 bis 120 °C und insbesondere bevorzugt im Bereich von 90 bis 110 °C.

Gegenstand der vorliegenden Erfindung ist daher auch ein Verfahren zum Verpacken von Lebensmitteln, wobei die zweite Temperatur (T2) oberhalb der Glasübergangstemperatur (T_{G(PZ)}) der in dem mindestens einen Polymerfilm (P) enthaltenen Polyamidzusammensetzung (PZ) liegt.

Gegenstand der vorliegenden Erfindung ist außerdem ein Verfahren zum Verpacken von Lebensmitteln, bei dem die zweite Temperatur (T2) im Bereich von 60 bis 150 °C liegt.

Der mindestens eine Polymerfilm (P) kann nach allen dem Fachmann bekannten Methoden auf die zweite Temperatur (T2) erwärmt werden. Beispielsweise kann er durch Wasserdampf oder Heißluft auf die zweite Temperatur (T2) erwärmt werden.

In Schritt b) schrumpft der mindestens eine Polymerfilm (P). Der mindestens eine Polymerfilm (P) kann bereits schrumpfen während er auf die zweite Temperatur (T2) gebracht wird. Ebenso ist es möglich, dass der mindestens eine Polymerfilm (P) erst dann schrumpft, wenn seine Temperatur bei der zweiten Temperatur (T2) liegt.

Unter "schrumpfen" wird im Rahmen der vorliegenden Erfindung verstanden, dass das Volumen des mindestens einen Polymerfilms (P) kleiner wird gegenüber dem Volumen des mindestens einen Polymerfilms (P), der die erste Temperatur (T1) aufweist. Beispielsweise wird das Volumen des mindestens einen Polymerfilms (P) um 10 bis 80 % kleiner, bevorzugt um 20 bis 70 % kleiner und insbesondere bevorzugt um 30 bis 60 % kleiner, jeweils bezogen auf das Volumen des mindestens einen Polymerfilms (P), der die erste Temperatur (T1) aufweist.

Der mindestens eine geschrumpfte Polymerfilm (P), der das Lebensmittel umhüllt, weist eine besonders hohe Sauerstoffbarriere auf und schützt das Lebensmittel daher besonders gut vor dem Eintritt von Sauerstoff. Diese gute Sauerstoffundurchlässigkeit bleibt auch bei hohen Luftfeuchten und hohen Temperaturen, beispielsweise oberhalb von 25 °C, erhalten.

Die vorliegende Erfindung wird durch die nachfolgenden Beispiele näher erläuert, ohne sie hierauf zu beschränken.

### Zu den Messmethoden:

Die Viskositätszahl der Polyamide wurde in einer 0,5 gew.-%igen Lösung in 96 gew.-%iger Schwefelsäure bei 25 °C gemäß EN ISO 307: 2007 + Amd 1: 2013 bestimmt.

Das Molekulargewicht Mw wurde mit Hilfe von SEC-Malls (Chi-san Wu, Handbook of size exclusion chromatography and related techniques, Page 19) bestimmt.

Die Glasübergangstemperaturen und Schmelztemperaturen wurden nach ISO 11357-1: 2009, ISO 11357-2: 2013 und ISO 11357-3: 2011 bestimmt. Dazu wurden zwei Heizläufe durchgeführt und die Glasübergangs- und Schmelztemperaturen anhand des zweiten Heizlaufs ermittelt.

Die Sauerstoff-Transmissionsrate bei 40 °C wurde nach ASTM D 3985-05 (2010) bei 0 % relativer Luftfeuchte bestimmt.

Die Reiß- und Streckspannung wurde nach ISO 527-3: 2003 bestimmt.

Die Durchstoßfestigkeit wurde nach der Norm für Lebensmittelfolien DIN EN 14477: 2004 bestimmt.

### Zu den Einsatzstoffen:

1.) Ein PA6 der Firma BASF SE®, vertrieben unter dem Markennamen Ultramid B40L. Es hatte eine gemessene Viskositätszahl von 250, ein absolutes Molekulargewicht Mw von 56200 und einen Schmelzpunkt von 219,8 °C.
2.) Ein PA6 der Firma BASF SE®, vertrieben unter dem Markennamen Ultramid B33L. Es hatte eine gemessene Viskositätszahl von 195, ein absolutes Molekulargewicht Mw von 42600 und einen Schmelzpunkt von 220,2 °C.
3.) Ein PA6/6.6 der Firma BASF SE®, vertrieben unter dem Markennamen Ultramid C40L. Es hatte eine gemessene Viskositätszahl von 250, ein absolutes Molekulargewicht Mw von 55300 und einen Schmelzpunkt von 189,6 °C.
4.) Ein PA6/6.6 der Firma BASF SE®, vertrieben unter dem Markennamen Ultramid C33L. Es hatte eine gemessene Viskositätszahl von 195, ein absolutes Molekulargewicht Mw von 42800 und einen Schmelzpunkt von 195 °C.
5.) Ein PA 6I/6T der Firma EMS-Chemie Holding AG® vertrieben unter dem Markennamen Grivory G21. Es hatte eine gemessene Viskositätszahl von 85, ein absolutes Molekulargewicht von 23400 und einer Glasübergangstemperatur von 125°C.
6.) Ein LDPE (low density polyethylene) der Firma LyondellBasell®, vertrieben unter dem Markennamen Lupolen 2420 F. Es hatte einen MFR (190 °C/2,16 kg) von 0,75 g/10 min laut technischem Datenblatt.
7.) Ein LLDPE (linear low density polyethylene) der Firma DOW®, vertrieben unter dem Markennamen DOWLEX 2045S. Es hatte einen MFR (melt flow rate) (190 °C/2,16 kg) von 1,0 g/10 min laut technischem Datenblatt.
8.) Ein EVA (Ethylenvinylacetat) der Firma ExxonMobil®, vertrieben unter dem Markennamen Escorene Ultra FL 00119. Es hatte einen MFI (melt flow index) (190 °C/2,16 kg) von 0,65 g/10 min laut technischem Datenblatt.
9.) Ein LDPE der Firma LyondellBasell®, vertrieben unter dem Markennamen Lupolen 3020 K. Es hatte einen MFR (190 °C/2,16 kg) von 4 g/10 min laut technischem Datenblatt.
10.) Ein TIE (Haftvermittler; mit Maleinsäureanhydrid gegraftetes Polyethylen) der Firma DuPont®, vertrieben unter dem Markennamen Bynel 4104. Es hatte einen MFR (190 °C/2,16 kg) von 1,1 g/10 min laut technischem Datenblatt.
11.) Ein TIE der Firma DuPont®, vertrieben unter dem Markennamen Bynel 4105. Es hatte einen MFR (190 °C/2,16 kg) von 4 g/10 min laut technischem Datenblatt.
12.) Eine erfindungsgemäße Komponente A, hergestellt aus 100 Mol-% Isophthalsäure sowie 100 Mol-% 2-Methyl-1,5-diaminopentan. Der Thermoplast zeigte eine Glasübergangstemperatur von 141 °C und eine Viskositätszahl von 84.
13.) Eine erfindungsgemäße Komponente A, hergestellt aus 60 Mol-% Terephthalsäure und 40 Mol-% Isophthalsäure sowie sowie 100 mol.-% 2-Methyl-1,5-diaminopentan. Der Thermoplast zeigte eine Glasübergangstemperatur von 146 °C und eine Viskositätszahl von 86.
14.) Eine erfindungsgemäße Komponente A, hergestellt aus 50 Mol-% Terephthalsäure und 50 Mol.-% Isophthalsäure sowie 50 Mol-% 2-Methyl-1,5-diaminopentan und 50 Mol-% Hexamethylendiamin. Der Thermoplast zeigte eine Glasübergangstemperatur von 139 °C und eine Viskositätszahl von 86.

Herstellung der erfindungsgemäßen Multilayerfilme im Blasverfahren:
Die Multilayerfilme wurden auf einer 7-Schicht Blasfolienanlage der Firma Collin® mit einem Düsenkopf-Durchmesser von 180 mm produziert. Von den 7 Extrudern hatten 6 einen Durchmesser von 30 mm und einer einen Durchmesser von 45 mm. Die Filme hatten eine Dicke von 100 µm und die Schichten eine Schichtstärke von 15/14/14/14/14/14/15 µm in den Multilayerfolien.
V-A: Ein Multilayerfilm mit dem Aufbau PE // PE // TIE // PA // TIE // PE // PE, wobei als PE ein Lupolen 2420 F der Firma LyondellBasell®, als TIE ein Bynel 4104 der Firma DuPont® eingesetzt wurden. Als Polyamidzusammensetzung (PZ) wurde eine Mischung aus 20 Gew.-% PA6 und 80 Gew.-% Einsatzstoff 12.) eingesetzt. Das PA6 war ein Ultramid B40L der Firma BASF SE®.
V-B: Ein Multilayerfilm mit dem Aufbau PE // PE // TIE // PA // TIE // PE // PE, wobei als PE ein Lupolen 2420 F der Firma LyondellBasell®, als TIE ein Bynel 4104 der Firma DuPont® eingesetzt wurden. Als Polyamidzusammensetzung (PZ) wurde eine Mischung aus 20 Gew.-% PA6 und 80 Gew.-% PA6I/6T eingesetzt. Das PA6 war ein Ultramid B40L der Firma BASF SE® und das PA6I/6T ein Grivory G21 der Firma EMS®.
V-C: Ein Multilayerfilm mit dem Aufbau PE // PE // TIE // PA // TIE // PE // PE, wobei als PE ein Lupolen 2420 F der Firma LyondellBasell®, als TIE ein Bynel 4104 der Firma DuPont® eingesetzt wurden. Als Polyamidzusammensetzung (PZ) wurde eine Mischung aus 80 Gew.-% PA6 und 20 Gew.-% PA6I/6T in einem Mischungsverhältnis von 8 : 2 eingesetzt. Das PA6 war ein Ultramid B33L der Firma BASF SE® und das PA6I/6T ein Grivory G21 der Firma EMS
D: Ein Multilayerfilm mit dem Aufbau PE // PE // TIE // PA // TIE // PE // PE, wobei als PE ein Lupolen 2420 F der Firma LyondellBasell®, als TIE ein Bynel 4104 der Firma DuPont® eingesetzt wurden. Als Polyamidzusammensetzung (PZ) wurde eine Mischung aus 75 Gew.-% PA6 (Ultramid B40L der Firma BASF SE®) und 25 Gew.-% Einsatzstoff 12.) eingesetzt.
E: Ein Multilayerfilm mit dem Aufbau PE // PE // TIE // PA // TIE // PE // PE, wobei als PE ein Lupolen 2420 F der Firma LyondellBasell®, als TIE ein Bynel 4104 der Firma DuPont® eingesetzt wurden. Als Polyamidzusammensetzung (PZ) wurde eine Mischung aus 85 Gew.-% PA6/6.6 (Ultramid C40L der Firma BASF SE®) und 15 Gew.-% Einsatzstoff 13.) eingesetzt.
F: Ein Multilayerfilm mit dem Aufbau EVA // PA // TIE // PE // LLDPE // PE // PE, wobei als EVA ein Escorene Ultra FL 00119 der Firma ExxonMobil®, als TIE ein Bynel 4104 der Firma DuPont® eingesetzt wurden. Als Polyamidzusammensetzung (PZ) wurde eine Mischung aus 90 Gew.-% PA6/6.6 (Ultramid C40L der Firma BASF SE®) und 10 Gew.-% Einsatzstoff 14.) eingesetzt. Als PE wurde ein Lupolen 2420 F der Firma LyondellBasell® und als LLDPE ein DOWLEX 2045S der Firma DOW® eingesetzt.

**Tabelle 1: Eigenschaften der Mono- und Multilayerfilme im Blasverfahren:**

| Films | V-A | V-B | V-C | D | E | F |
|---|---|---|---|---|---|---|
| | | | | | | |
| Durchstoßfestigkeit [N/mm] | 3,4 | 5,9 | 6,8 | 7,1 | 7,6 | 10,2 |
| Reißdehnung [%] | 274 | 318 | 474 | 494 | 547 | 511 |
| Sauerstoff-Transmissionsrate [cm³/(m²*d)] | 187 | 189 | 186 | 178 | 182 | 183 |
| Streckspannung [MPa] | 21,1 | 23,1 | 23,9 | 25,7 | 27,5 | 27,8 |

Herstellung der Multi- und Monolayerfilme im Castverfahren:
Die Multilayerfilme wurden auf einer 7-Schicht Castfolienanlage der Firma Collin® mit einer Düsenkopfbreite von 800 mm produziert. Von den 7 Extrudern hatten 6 einen Durchmesser von 30 mm und einer einen Durchmesser von 45 mm. Die Filme hatten eine Dicke von 100 µm und die Schichten eine Schichtstärke von 15/14/14/14/14/14/15 µm in den Multilayerfolien. Der Monolayerfilm wird an derselben Anlage mit nur einem Extruder mit 45 mm produziert.
V-Ai): Ein Multilayerfilm mit dem Aufbau PE // PE // TIE // PA // TIE // PE // PE, wobei als PE ein Lupolen 3020 K der Firma LyondellBasell®, als TIE ein Bynel 4105 der Firma DuPont® eingesetzt wurden. Als Polyamidzusammensetzung (PZ) wurde eine Mischung aus 20 Gew.-% PA6 und 80 Gew.-% Einsatzstoff 12.) eingesetzt. Das PA6 war ein Ultramid B33L der Firma BASF SE®.
V-Bi): Ein Multilayerfilm mit dem Aufbau PE // PE // TIE // PA // TIE // PE // PE, wobei als PE ein Lupolen 3020 K der Firma LyondellBasell®, als TIE ein Bynel 4105 der Firma DuPont® eingesetzt wurden. Als Polyamidzusammensetzung (PZ) wurde eine Mischung aus 20 Gew.-% PA6 und 80 Gew.-% PA6I/6T eingesetzt. Das PA6 war ein Ultramid B33L der Firma BASF SE® und das PA6I/6T ein Grivory G21 der Firma EMS®.
V-Ci): Ein Multilayerfilm mit dem Aufbau PE // PE // TIE // PA // TIE // PE // PE, wobei als PE ein Lupolen 3020 K der Firma LyondellBasell®, als TIE ein Bynel 4105 der Firma DuPont® eingesetzt wurden. Als Polyamidzusammensetzung (PZ) wurde eine Mischung aus 80 Gew.-% PA6 und 20 Gew.-% PA6I/6T eingesetzt. Das PA6 war ein Ultramid B33L der Firma BASF SE® und das PA6I/6T ein Grivory G21 der Firma EMS®. Das Mischungsverhältnis von Ultramid B33L zu Grivory G21 betrug 8 : 2.
Di): Ein Multilayerfilm mit dem Aufbau PE // PE // TIE // PA // TIE // PE // PE, wobei als PE ein Lupolen 3020 K der Firma LyondellBasell®, als TIE ein Bynel 4105 der Firma DuPont® eingesetzt wurden. Als Polyamidzusammensetzung (PZ) wurde eine Mischung aus 75 Gew.-% PA6 (Ultramid B33L der Firma BASF SE®) und 25 Gew.-% Einsatzstoff 12.) eingesetzt.
Ei): Ein Multilayerfilm mit dem Aufbau PE // PE // TIE // PA // TIE // PE // PE, wobei als PE ein Lupolen 3020 K der Firma LyondellBasell®, als TIE ein Bynel 4105 der Firma DuPont® eingesetzt wurden. Als Polyamidzusammensetzung (PZ) wurde eine Mischung aus 85 Gew.-% PA6/6.6 (Ultramid C33L der Firma BASF SE®) und 15 Gew.-% Einsatzstoff 13.) eingesetzt.
Fi): Ein Multilayerfilm mit dem Aufbau EVA // PA // TIE // PE // LLDPE // PE // PE, wobei als EVA ein Escorene Ultra FL 00119 der Firma ExxonMobil®, als TIE ein Bynel 4105 der Firma DuPont® eingesetzt wurden. Als Polyamidzusammensetzung (PZ) wurde eine Mischung aus 90 Gew.-% PA6/6.6 (Ultramid C33L der Firma BASF SE®) und 10 Gew.-% Einsatzstoff 14.) eingesetzt. Als PE wurde ein Lupolen 3020 K der Firma LyondellBasell® und als LLDPE ein DOWLEX 2045S der Firma DOW® eingesetzt.
Gi): Ein Monolayerfilm aus einer Mischung von 80 Gew.-% PA6 (Ultramid C33L der Firma BASF SE®) und 20 Gew.-% Einsatzstoff 12.).

**Tabelle 2: Eigenschaften der Mono- und Multilayerfilme hergestellt im Castverfahren:**

| Films | V-Ai.) | V-Bi.) | V-Ci.) | Di.) | Ei.) | Fi.) | Gi.) |
|---|---|---|---|---|---|---|---|
| | | | | | | | |
| Durchstoßfestigkeit [N/mm] | 6,2 | 6,3 | 6,6 | 7,2 | 8,2 | 10,2 | 28,1 |
| Reißdehnung [%] | 334 | 301 | 386 | 489 | 458 | 501 | 424 |
| Sauerstoff-Transmissionsrate [cm³/(m²*d)] | 138 | 210 | 205 | 150 | 172 | 196 | 83 |
| Streckspannung [MPa] | 17,1 | 19,1 | 21,8 | 25,9 | 23,4 | 30,1 | 55,0 |

## Patentansprüche

1. Polymerfilm (P) enthaltend mindestens eine Polyamidzusammensetzung (PZ), die die Komponenten
(A) 2 bis 30 Gew.-% mindestens eines amorphen Polyamids hergestellt durch Polymerisation der Komponenten
(A1) mindestens eine Dicarbonsäure und
(A2) mindestens ein Diamin; und
(B) 70 bis 98 Gew.-% mindestens eines teilkristallinen Polyamids;
enthält, wobei die Komponente (A1) Isophthalsäure enthält und die Komponente (A2) 2-Methyl-1,5-diaminopentan enthält und wobei die Gewichtsprozente jeweils bezogen sind auf die Summe der Gewichtsprozente der Komponenten (A) und (B).

2. Polymerfilm (P) gemäß Anspruch 1, **dadurch gekennzeichnet, dass** die Komponente (B) ausgewählt ist aus der Gruppe bestehend aus Polyamid 6 und Polyamid 6/6.6.

3. Polymerfilm (P) gemäß Anspruch 1 oder 2, **dadurch gekennzeichnet, dass** die Komponente (A1) im Bereich von 20 bis 95 mol-% Isophthalsäure und im Bereich von 5 bis 80 mol-% Terephthalsäure enthält, jeweils bezogen auf die Gesamtstoffmenge der Komponente (A1).

4. Polymerfilm (P) gemäß einem der Ansprüche 1 bis 3, **dadurch gekennzeichnet, dass** das mindestens eine amorphe Polyamid (A) hergestellt wird durch Polymerisation der Komponenten (A1) und (A2) und zusätzlich einer Komponente (A3), wobei die Komponente (A3) ausgewählt ist aus der Gruppe bestehend aus Lactamen mit 4 bis 12 Kohlenstoffatomen und Monomergemischen (M), die mindestens eine lineare, aliphatische Dicarbonsäure mit 4 bis 12 Kohlenstoffatomen und mindestens ein lineares, aliphatisches Diamin mit 4 bis 12 Kohlenstoffatomen enthalten.

5. Polymerfilm (P) gemäß einem der Ansprüche 1 bis 4, **dadurch gekennzeichnet, dass** die Komponente (A) eine Glasübergangstemperatur (T_{G(A)}) aufweist, wobei die Glasübergangstemperatur (T_{G(A)}) im Bereich von 130 bis 150 °C liegt.

6. Polymerfilm (P) gemäß einem der Ansprüche 1 bis 5, **dadurch gekennzeichnet, dass** die Komponente (B) eine Schmelztemperatur (T_{M(B)}) aufweist, wobei die Schmelztemperatur (T_{M(B)}) im Bereich von 170 bis 230 °C liegt.

7. Polymerfilm (P) gemäß einem der Ansprüche 1 bis 6, **dadurch gekennzeichnet, dass** die Komponente (A) eine Viskositätszahl (VZ_{(A)}) im Bereich von 60 bis 200 ml/g aufweist, bestimmt in einer 0,5 Gew.-%igen Lösung der Komponente (A) in 96 Gew.-%iger Schwefelsäure bei 25 °C.

8. Polymerfilm (P) gemäß einem der Ansprüche 1 bis 7, **dadurch gekennzeichnet, dass** die Komponente (B) eine Viskositätszahl (VZ_{(B)}) im Bereich von 90 bis 350 ml/g aufweist, bestimmt in einer 0,5 Gew.-%igen Lösung der Komponente (B) in 96 Gew.-%iger Schwefelsäure bei 25 °C.

9. Polymerfilm (P) gemäß einem der Ansprüche 1 bis 8, **dadurch gekennzeichnet, dass** die Komponente (A) ein Poly(2-Methyl-1,5-pentamethylenisophthalamid-co-2-Methyl-1,5-pentamethylenterephthalamid) enthält.

10. Polymerfilm (P) gemäß einem der Ansprüche 1 bis 9, **dadurch gekennzeichnet, dass** der Polymerfilm (P) mindestens eine Schicht der mindestens einen Polyamidzusammensetzung (PZ) enthält und der Polymerfilm (P) mindestens eine weitere Schicht enthält, wobei die mindestens eine weitere Schicht mindestens ein weiteres Polymer (P2), das ausgewählt ist aus der Gruppe bestehend aus Polyolefinen, Poly(ethylenvinylalkoholen), Poly(ethylenvinylacetaten), Polyethylenterephthalaten, Polyvinylidenchloriden und mit Maleinsäureanhydrid gegrafteten Polyolefinen, enthält.

11. Polymerfilm (P) gemäß einem der Ansprüche 1 bis 10, **dadurch gekennzeichnet, dass** der Polymerfilm (P) in einem Castverfahren, in einem Blasverfahren, in einem Biaxially-oriented Polyamide Film-Verfahren oder in einem Multiblasverfahren hergestellt wird.

12. Polymerfilm (P) gemäß einem der Ansprüche 1 bis 11, **dadurch gekennzeichnet, dass** der Polymerfilm (P) eine Dicke im Bereich von 0,1 µm bis 1 mm aufweist.

13. Verfahren zum Verpacken von Lebensmitteln, umfassend die Schritte:
a) Bereitstellen eines Lebensmittels, das von mindestens einem Polymerfilm (P) gemäß einem der Ansprüche 1 bis 12 umhüllt ist, wobei der mindestens eine Polymerfilm (P) eine erste Temperatur (T1) aufweist,
b) Erwärmen des mindestens einen Polymerfilms (P) auf eine zweite Temperatur (T2), die im Bereich von 60 bis 150 °C liegt, wodurch der mindestens eine Polymerfilm (P) schrumpft, unter Erhalt des Lebensmittels, das von dem mindestens einen geschrumpften Polymerfilm (P) umhüllt ist, wobei die erste Temperatur (T1) unterhalb der Glasübergangstemperatur (T_{G(PZ)}) der in dem mindestens einen Polymerfilm (P) enthaltenen mindestens einen Polyamidzusammensetzung (PZ) liegt.

14. Verfahren zur Herstellung eines Polymerfilms (P) gemäß einem der Ansprüche 1 bis 12, umfassend die Schritte
i) Bereitstellen mindestens einer Polyamidzusammensetzung (PZ), die die Komponenten
(A) 2 bis 30 Gew.-% mindestens eines amorphen Polyamids hergestellt durch Polymerisation der Komponenten
(A1) mindestens eine Dicarbonsäure und
(A2) mindestens ein Diamin; und
(B) 70 bis 98 Gew.-% mindestens eines teilkristallinen Polyamids;
enthält, wobei die Komponente (A1) Isophthalsäure enthält und die Komponente (A2) 2-Methyl-1,5-diaminopentan enthält und wobei die Gewichtsprozente jeweils bezogen sind auf die Summe der Gewichtsprozente der Komponenten (A) und (B), in geschmolzener Form in einem ersten Extruder,
ii) Extrusion der in Schritt i) bereitgestellten mindestens einen Polyamidzusammensetzung (PZ) in geschmolzener Form aus dem ersten Extruder durch eine Düse unter Erhalt eines Films der mindestens einen Polyamidzusammensetzung (PZ) in geschmolzener Form,
iii) Abkühlen des in Schritt ii) erhaltenen Films der mindestens einen Polyamidzusammensetzung (PZ) in geschmolzener Form, wobei die mindestens eine Polyamidzusammensetzung (PZ) erstarrt unter Erhalt des Polymerfilms (P).

## Claims

1. A polymer film (P) comprising at least one polyamide composition (PZ) which comprises the following components:
(A) 2 to 30% by weight of at least one amorphous polyamide produced by polymerization of the following components:
(A1) at least one dicarboxylic acid and
(A2) at least one diamine; and
(B) 70 to 98% by weight of at least one semicrystalline polyamide;
where component (A1) comprises isophthalic acid and component (A2) comprises 2-methyl-1,5-diaminopentane, and where the percentages by weight are in each case based on the sum of the percentages by weight of components (A) and (B).

2. The polymer film (P) according to claim 1, wherein component (B) is selected from the group consisting of polyamide 6 and polyamide 6/6.6.

3. The polymer film (P) according to claim 1 or 2, wherein component (A1) comprises 20 to 95 mol% of isophthalic acid and 5 to 80 mol% of terephthalic acid, based in each case on the total molar quantity of component (A1).

4. The polymer film (P) according to any of claims 1 to 3, wherein the at least one amorphous polyamide (A) is produced by polymerization of components (A1) and (A2) and additionally of a component (A3), where component (A3) is selected from the group consisting of lactams having 4 to 12 carbon atoms and monomer mixtures (M) which comprise at least one linear aliphatic dicarboxylic acid having 4 to 12 carbon atoms and at least one linear aliphatic diamine having 4 to 12 carbon atoms.

5. The polymer film (P) according to any of claims 1 to 4, wherein component (A) has a glass transition temperature (T_{G(A)}), where the glass transition temperature (T_{G(A)}) is in the range of 130 to 150°C.

6. The polymer film (P) according to any of claims 1 to 5, wherein component (B) has a melting point (T_{M(B)}), where the melting point (T_{M(B)}) is in the range of 170 to 230°C.

7. The polymer film (P) according to any of claims 1 to 6, wherein component (A) has an intrinsic viscosity (VZ_{(A)}) in the range of 60 to 200 ml/g, determined in a 0.5% by weight solution of component (A) in 96% by weight sulfuric acid at 25°C.

8. The polymer film (P) according to any of claims 1 to 7, wherein component (B) has an intrinsic viscosity (VZ_{(B)}) in the range of 90 to 350 ml/g, determined in a 0.5% by weight solution of component (B) in 96% by weight sulfuric acid at 25°C.

9. The polymer film (P) according to any of claims 1 to 8, wherein component (A) comprises a poly(2-methyl-1,5-pentamethylene isophthalamido-2-methyl-1,5-pentamethylene terephthalamide).

10. The polymer film (P) according to any of claims 1 to 9, wherein the polymer film (P) comprises at least one layer of the at least one polyamide composition (PZ) and the polymer film (P) comprises at least one further layer, where the at least one further layer comprises at least one further polymer (P2) selected from the group consisting of polyolefins, poly(ethylene-vinyl alcohols), poly(ethylene-vinyl acetates), polyethylene terephthalates, polyvinylidene chlorides and maleic-anhydride-grafted polyolefins.

11. The polymer film (P) according to any of claims 1 to 10, wherein the polymer film (P) is produced in a casting process, in a blowing process, in a biaxially-oriented-polyamide-film process or in a multiblowing process.

12. The polymer film (P) according to any of claims 1 to 11, wherein the polymer film (P) has a thickness in the range of 0.1 µm to 1 mm.

13. A process for the packaging of foods, comprising the following steps:
a) provision of a food wrapped by at least one polymer film (P) according to any of claims 1 to 12, where the at least one polymer film (P) has a first temperature (T1),
b) heating of the at least one polymer film (P) to a second temperature (T2) which is in the range of 60 to 150°C, and thus shrinking the at least one polymer film (P) to give the food wrapped by the at least one shrunk polymer film (P), where the first temperature (T1) is below the glass transition temperature (T_{G(PZ)}) of the at least one polyamide composition (PZ) comprised in the at least one polymer film (P).

14. A process for the production of a polymer film (P) according to any of claims 1 to 12, comprising the following steps:
i) provision, in molten form in a first extruder, of at least one polyamide composition (PZ) which comprises the following components:
(A) 2 to 30% by weight of at least one amorphous polyamide produced by polymerization of the following components:
(A1) at least one dicarboxylic acid and
(A2) at least one diamine; and
(B) 70 to 98% by weight of at least one semicrystalline polyamide;
where component (A1) comprises isophthalic acid and component (A2) comprises 2-methyl-1,5-diaminopentane, and where the percentages by weight are in each case based on the sum of the percentages by weight of components (A) and (B),
ii) extrusion, in molten form from the first extruder, of the at least one polyamide composition (PZ) provided in step i) through a die to give a film of the at least one polyamide composition (PZ) in molten form,
iii) cooling of the film, obtained in step ii), of the at least one polyamide composition (PZ) in molten form, where the at least one polyamide composition (PZ) solidifies to give the polymer film (P) .

## Revendications

1. Film (P) de polymère contenant au moins une composition de (PZ) polyamide, qui contient les composants
(A) 2 à 30 % en poids d'au moins un polyamide amorphe préparé par polymérisation des composants
(A1) au moins un acide dicarboxylique et
(A2) au moins une diamine ; et
(B) 70 à 98 % en poids d'au moins un polyamide partiellement cristallin ;
le composant (A1) contenant de l'acide isophtalique et le composant (A2) contenant du 2-méthyl-1,5-diaminopentane et les pourcentages en poids se rapportant à chaque fois à la somme des pourcentages en poids des composants (A) et (B).

2. Film (P) de polymère selon la revendication 1, **caractérisé en ce que** le composant (B) est choisi dans le groupe constitué par le polyamide 6 et le polyamide 6/6.6.

3. Film (P) de polymère selon la revendication 1 ou 2, **caractérisé en ce que** le composant (A1) contient dans la plage de 20 à 95 % en moles d'acide isophtalique et dans la plage de 5 à 80 % en moles d'acide téréphtalique, à chaque fois par rapport au nombre total de moles du composant (A1) .

4. Film (P) de polymère selon l'une quelconque des revendications 1 à 3, **caractérisé en ce que** l'au moins un polyamide amorphe (A) est préparé par polymérisation des composants (A1) et (A2) et, de plus, d'un composant (A3), le composant (A3) étant choisi dans le groupe constitué par des lactames comportant 4 à 12 atomes de carbone et des mélanges (M) de monomères, qui contiennent au moins un acide dicarboxylique aliphatique, linéaire comportant 4 à 12 atomes de carbone et au moins une diamine aliphatique, linéaire comportant 4 à 12 atomes de carbone.

5. Film (P) de polymère selon l'une quelconque des revendications 1 à 4, **caractérisé en ce que** le composant (A) présente une température de transition vitreuse (T_{G(A)}), la température de transition vitreuse (T_{G(A)}) se situant dans la plage de 130 à 150 °C.

6. Film (P) de polymère selon l'une quelconque des revendications 1 à 5, **caractérisé en ce que** le composant (B) présente une température de fusion (T_{M(B)}), la température de fusion (T_{M(B)}) se situant dans la plage de 170 à 230 °C.

7. Film (P) de polymère selon l'une quelconque des revendications 1 à 6, **caractérisé en ce que** le composant (A) présente un indice de viscosité (VZ_{(A)}) dans la plage de 60 à 200 ml/g, déterminé dans une solution à 0,5 % en poids du composant (A) dans de l'acide sulfurique à 96 % en poids à 25 °C.

8. Film (P) de polymère selon l'une quelconque des revendications 1 à 7, **caractérisé en ce que** le composant (B) présente un indice de viscosité (VZ_{(B)}) dans la plage de 90 à 350 ml/g, déterminé dans une solution à 0,5 % en poids du composant (B) dans de l'acide sulfurique à 96 % en poids à 25 °C.

9. Film (P) de polymère selon l'une quelconque des revendications 1 à 8, **caractérisé en ce que** le composant (A) contient un poly(2-méthyl-1,5-pentaméthylèneisophtalamide-co-2-méthyl-1,5-pentaméthylènetéréphtalamide).

10. Film (P) de polymère selon l'une quelconque des revendications 1 à 9, **caractérisé en ce que** le film (P) de polymère contient au moins une couche de l'au moins une composition (PZ) de polyamide et le film (P) de polymère contient au moins une couche supplémentaire, l'au moins une couche supplémentaire contenant au moins un polymère supplémentaire (P2), qui est choisi dans le groupe constitué par les polyoléfines, les poly(éthylène-alcool vinylique), les poly(éthylène-acétate de vinyle), les poly(téréphtalate d'éthylène), les poly(chlorure de vinylidène) et les polyoléfines greffées avec l'anhydride maléique.

11. Film (P) de polymère selon l'une quelconque des revendications 1 à 10, **caractérisé en ce que** le film (P) de polymère est préparé dans un procédé de moulage, dans un procédé de soufflage, dans un procédé de film de polyamide orienté de manière biaxiale ou dans un procédé de multisoufflage.

12. Film (P) de polymère selon l'une quelconque des revendications 1 à 11, **caractérisé en ce que** le film (P) de polymère présente une épaisseur dans la plage de 0,1 µm à 1 mm.

13. Procédé pour l'emballage de produits alimentaires, comprenant les étapes de :
a) mise à disposition d'un produit alimentaire, qui est enveloppé par au moins un film (P) de polymère selon l'une quelconque des revendications 1 à 12, l'au moins un film (P) de polymère présentant une première température (T1),
b) chauffage de l'au moins un film (P) de polymère à une deuxième température (T2), qui se situe dans la plage de 60 à 150 °C, par l'intermédiaire duquel l'au moins un film (P) de polymère rétrécit, avec obtention du produit alimentaire qui est enveloppé par l'au moins un film (P) de polymère rétréci, la première température (T1) se situant en dessous de la température de transition vitreuse (T_{G(PZ)}) de l'au moins une composition (PZ) de polyamide contenue dans l'au moins un film (P) de polymère.

14. Procédé pour la préparation d'un film (P) de polymère selon l'une quelconque des revendications 1 à 12, comprenant les étapes de
i) mise à disposition d'au moins une composition (PZ) de polyamide, qui contient les composants
(A) 2 à 30 % en poids d'au moins un polyamide amorphe préparé par polymérisation des composants
(A1) au moins un acide dicarboxylique et
(A2) au moins une diamine ; et
(B) 70 à 98 % en poids d'au moins un polyamide partiellement cristallin ;
le composant (A1) contenant de l'acide isophtalique et le composant (A2) contenant du 2-méthyl-1,5-diaminopentane et les pourcentages en poids se rapportant à chaque fois à la somme des pourcentages en poids des composants (A) et (B), sous forme fondue dans une première extrudeuse,
ii) extrusion de l'au moins une composition (PZ) de polyamide mise à disposition dans l'étape i) sous forme fondue à partir de la première extrudeuse par l'intermédiaire d'une buse avec obtention d'un film de l'au moins une composition (PZ) de polyamide sous forme fondue,
iii) refroidissement du film, obtenu dans l'étape ii), de l'au moins une composition (PZ) de polyamide sous forme fondue, l'au moins une composition (PZ) de polyamide figeant avec obtention du film (P) de polymère.
